# EUROPEAN PATENT APPLICATION

(11) **EP 4 808 214 A1**
(43) Date of publication of application: **16.09.2026**
(21) Application number: 24899702.5
(22) Date of filing: 27.11.2024
(51) Int. Cl.: H04W 48/10

(54) **COMMUNICATION METHOD AND RELATED APPARATUS**

(30) Priority: 04.12.2023 CN 202311654012
(71) Applicant: Huawei Technologies Co., Ltd., Shenzhen, Guangdong 518129 (CN)
(72) Inventor: ZONG, Zaifeng, Shenzhen, Guangdong 518129 (CN); YIN, Yu, Shenzhen, Guangdong 518129 (CN)
(74) Representative: Isarpatent
(86) International application number: PCT/CN2024/135071
(87) International publication number: WO 2025/119062

(57) **Abstract**

This application provides a communication method and a related apparatus. In the communication method provided in this application, a first list configured by a first terminal device includes a network identifier of at least one non-PLMN network. When network identifier information broadcast by an access network device and received by the first terminal device is included in the first list, the first terminal device requests, from the access network device, to access the broadcast non-PLMN network. According to the foregoing method, home operators of the first terminal device and the access network device do not need to be considered, so that terminal devices belonging to different operators can share the access network device and access a same non-PLMN network.

## Description

This application claims priority to Chinese Patent Application No. 202311654012.1, filed with the China National Intellectual Property Administration on December 4, 2023 and entitled "COMMUNICATION METHOD AND RELATED APPARATUS", which is incorporated herein by reference in its entirety.

### TECHNICAL FIELD

Embodiments of this application relate to the field of communication technologies, and in particular, to a communication method and a related apparatus.

### BACKGROUND

In different environments such as enterprises, campuses, and venues, users have different service requirements for communication networks. To enhance user experience, dedicated networks may be deployed for respective environments. The dedicated network may also be referred to as a subnet network, which is capable of providing users with improved services. However, the subnet network supports access by subscribed users of an operator that has deployed the subnet. Accordingly, how users belonging to different operators can access a same subnet becomes a new technical problem.

### SUMMARY

Embodiments of this application provide a communication method and a related apparatus, to enable subnet users belonging to different network operators to access a same subnet in an access scenario, thereby meeting service requirements of the subnet users.

According to a first aspect, an embodiment of this application provides a communication method, applied to a first terminal device. The method includes:
receiving identification information of a first network from an access network device, where the access network device supports access of a terminal device to the first network; and sending a first request message and the identification information of the first network to the access network device when a first list of the first terminal device includes the identification information of the first network, where the first request message is used to request access of the first terminal device to the first network, and the first list includes identification information of one or more non-public land mobile networks PLMNs.

When selecting a subnet based on the first list and broadcast subnet identification information, the first terminal device does not need to consider a PLMN ID configured in a subscriber identity module SIM card loaded on the first terminal device and a PLMN ID broadcast by the access network. Even if the first terminal device and the access network device belong to different operators, the first terminal device may still initiate, to the access network device, a request for accessing the subnet.

In some implementations, the first terminal device includes a first logical interface, the first logical interface is configured to access a non-PLMN network, and the first logical interface is configured with the first list.

Sending the first request message and the identification information of the first network to the access network device when the first list of the first terminal device includes the identification information of the first network includes:
sending the first request message and the identification information of the first network to the access network device when the first logical interface is in an enabled state and the first list includes the identification information of the first network.

The first list is configured by using the first logical interface configured to access the first network, so that an association between the first list and a subscriber identity module can be reduced. There is a switch that is on the first terminal device and that is configured to control enabling or disabling of the first logical interface. The switch can avoid unnecessary energy consumption caused by performing network search by the first terminal device when the first terminal device cannot access the subnet, thereby saving energy for the first terminal device.

In some implementations, the method further includes:
receiving identification information of a third network from the access network device, where the first list includes the identification information of the third network; and sending the first request message and the identification information of the first network to the access network device when the first list of the first terminal device includes the identification information of the first network includes: sending the first request message and the identification information of the first network to the access network device when the first list includes the identification information of the first network and a priority of the first network is higher than a priority of the third network.

The first network with a higher priority is selected as a to-be-accessed network based on network priorities in the first list, so that a network with a highest matching degree can be selected for the first terminal device.

In some implementations, the first request message includes a first identifier and/or a second identifier, the first identifier is an identifier of the first terminal device in the first network, the second identifier is an identifier of the terminal device in a second network, and the second network is a PLMN network.

In some implementations, the first terminal device includes a second logical interface, the second logical interface is configured to access the second network, and the second identifier is associated with the second logical interface.

That the first request message includes the second identifier includes:
the first request message includes the second identifier when the first logical interface is associated with the second logical interface or the first network is associated with the second logical interface.

In some implementations, the method further includes:
sending a first identifier and/or a second identifier, where the first identifier is an identifier of the first terminal device in the first network, the second identifier is an identifier of the first terminal device in a second network, and the second network is a PLMN network.

In some implementation methods, before sending the first identifier and/or the second identifier, the method further includes:
receiving first information, where the first information is used to request the identifier of the first terminal device in the first network; and/or receiving second information, where the second information is used to request the identifier of the first terminal device in the second network.

In some implementations, the first terminal device includes a second logical interface, the second logical interface is configured to access the second network, and the second identifier is associated with the second logical interface.

Sending the second identifier includes:
sending the second identifier when the first logical interface is associated with the second logical interface, or the first network is associated with the second logical interface.

The second identifier may be determined through the second logical interface, when the first logical interface is associated with the second logical interface, or the first network is associated with the second logical interface.

In some implementations, the method further includes:
obtaining first indication information, where the first indication information indicates that the first logical interface is associated with the second logical interface, or the first indication information indicates that the first network is associated with the second logical interface.

In some implementations, the first request message further includes third information, and the third information indicates a network slice and/or a logical network that the first terminal device in the first network requests to access.

The method further includes:
receiving fourth information, where the fourth information indicates a network slice and/or a logical network that the first terminal device in the first network is allowed to access.

In some implementations, the method further includes:
sending a first session request message, where the first session request message is used to request to set up a session between the first terminal device and a user plane network element in the first network.

In some implementations, the first session request message includes an identifier of a network slice and/or a logical network, and the network slice and/or the logical network is the network slice and/or the logical network that the first terminal device in the first network requests to access.

In some implementations, the first request message is further used to request to access a first service of the public land mobile network PLMN through the first network.

The method further includes:
receiving fifth information, where the fifth information indicates whether the first terminal device is allowed to access the first service of the PLMN through the first network; and when the fifth information indicates that the first terminal device is allowed to access the first service of the PLMN through the first network, the first session request message further includes information indicating the first service.

A single-mode terminal device can access both a PLMN and a subnet by accessing a service of the PLMN through the first network, or access a service of the PLMN when there is no PLMN access network device at a current location.

According to a second aspect, an embodiment of this application provides a communication method, applied to a mobility management network element. The method includes:
receiving a first request message and identification information of a first network from an access network device, where the first request message is used to request to register a first terminal device with the first network, the first network is a non-PLMN network, and the access network device and the mobility management network element support access of a terminal device to the first network; sending a second request message to a control plane network element in the first network based on the identification information of the first network, where the second request message is used to request access of the first terminal device to the first network; and receiving a first response message from the control plane network element, where the first response message indicates whether the first terminal device is allowed to access the first network.

In some implementations, sending the second request message to the control plane network element in the first network includes:
when authentication for the first terminal device succeeds, sending the second request message to the control plane network element, where the authentication for the first terminal device is based on a second identifier, the second identifier is an identifier of the first terminal device in a second network, and the second network is a PLMN network.

Performing SIM authentication on the first terminal device can improve security of the first terminal device in a process of accessing a subnet.

In some implementations, the first request message includes the second identifier; or the method further includes: sending a message used to request the identifier of the first terminal device in the second network; and receiving the second identifier.

In some implementations, when the authentication for the first terminal device succeeds, sending the second request message to the control plane network element includes:
when the authentication for the first terminal device succeeds, obtaining a first identifier, where the first identifier is an identifier of the first terminal device in the first network, and the first identifier is an external identifier of the first terminal device; and sending the second request message to the control plane network element, where the second request message includes the first identifier.

In some implementations, the first request message includes a first identifier, the first identifier is an identifier of the first terminal device in the first network, and the first identifier is an external identifier of the first terminal device.

Sending the second request message to the control plane network element in the first network includes:
sending the second request message to the control plane network element when the verification on the first identifier succeeds.

In some implementations, the second request message includes at least one of the following: the first identifier or information indicating that the verification on the first identifier succeeds.

In some implementations, before sending the second request message to the control plane network element, the method further includes:
sending, to a core network element in the second network, a message used to request the external identifier of the first terminal device, where the core network element in the second network is configured to manage an external identifier of a terminal device belonging to the second network, and the second network is a network deployed by a home operator of the first terminal device; and receiving the external identifier of the first terminal device from the core network element; and that the verification on the first identifier succeeds includes: the external identifier of the first terminal device from the core network element includes the first identifier.

In some implementations, before sending the second request message to the control plane network element, the method further includes:
sending, to a core network element in the second network, a message used to request to verify the first identifier, where the core network element in the second network is configured to manage an external identifier of a terminal device belonging to the second network, and the second network is a network deployed by a home operator of the first terminal device; and receiving a second response message from the core network element, where the second response message indicates a verification result of the first identifier; and that the verification on the first identifier succeeds includes: the second response message indicates that the verification on the first identifier succeeds.

When the first identifier is the external identifier of the first terminal device, validity of the first identifier is verified, so that security of the first terminal device in a process of accessing a subnet can be improved.

In some implementations, the method further includes:
receiving a first session request message from the first terminal device, where the first session request message is used to request to set up a session between the first terminal device and a first user plane network element in the first network.

In some implementations, the method further includes:
triggering, based on the first session request message, a message used by a second user plane network element to allocate uplink tunnel information and downlink tunnel information to the session, where there is an interface between the second user plane network element and the access network device; receiving the first uplink tunnel information and the first downlink tunnel information from the second user plane network element, where the first uplink tunnel information is used to send uplink data of the session to the second user plane network element, and the first downlink tunnel information is used to send downlink data of the session to the second user plane network element; sending a second session request message to the control plane network element, where the second session request message is used to request to set up a session between the first terminal device and the first user plane network element, and the second session request message includes the first downlink tunnel information; and receiving second uplink tunnel information from the control plane network element, where the second uplink tunnel information is used to send the uplink data of the session to the first user plane network element; and send the first uplink tunnel information to the access network device.

In some implementations, the second request message includes a first terminal identifier, and the first terminal identifier indicates the first terminal device in the mobility management network element.

In some implementations, the first response message includes a second terminal identifier, and the second terminal identifier indicates the first terminal device in the control plane network element.

In some implementations, the method further includes: receiving a downlink non-access stratum NAS message and the first terminal identifier from the control plane network element, and sending the downlink NAS message to the first terminal device based on the first terminal identifier; and/or receiving an uplink NAS message from the first terminal device, and sending the uplink NAS message and the second terminal identifier to the control plane network element.

The first terminal identifier and the second terminal identifier indicates the first terminal device in different network elements, so that privacy information of the first terminal device can be prevented from being leaked in a process of accessing a subnet.

According to a third aspect, an embodiment of this application provides a communication method, applied to a control plane network element in a first network, where the method includes:
receiving a second request message from a mobility management network element, where the second request message is used to request access of a first terminal device to the first network, and the mobility management network element supports access of a terminal device to the first network; determining, based on subscription information of the first terminal device in the first network, whether the first terminal device is allowed to access the first network; and sending a first response message to the mobility management network element, where the first response message indicates whether the first terminal device is allowed to access the first network.

The control plane network element in the first network performs authorization and authentication on whether the first terminal device can access the first network, so that privacy of a subscriber in the first network can be protected, management convenience of the subscriber in the first network can be improved, and interference between data in different subnets can be avoided.

In some implementations, the second request message is further used to request to access a first service of a public land mobile network PLMN through the first network, the subscription information of the first terminal device in the first network includes second indication information, and the second indication information indicates whether the first terminal device is allowed to access a service of the PLMN through the first network.

The method further includes:
determining, based on the second request message and the second indication information, whether the first terminal device is allowed to access the first service of the PLMN through the first network.

In some implementations, the first response message further includes third information, and the third information indicates whether the first terminal device is allowed to access the first service of the PLMN through the first network.

In some implementations, before determining, based on the subscription information of the first terminal device in the first network, whether the first terminal device is allowed to access the first network, the method further includes:
obtaining the subscription information of the first terminal device in the first network based on a first identifier, where the first identifier is an identifier of the first terminal device in the first network.

In some implementations, the second request message includes the first identifier; or the method further includes: sending a message used to request the identifier of the first terminal device in the first network; and receiving the first identifier.

In some implementations, the first identifier is an external identifier of the first terminal device.

Obtaining the subscription information of the first terminal device in the first network based on the first identifier includes:
obtaining the subscription information of the first terminal device in the first network based on the first identifier when verification on the first identifier succeeds.

In some implementations, that the verification on the first identifier succeeds includes: the second request message further includes information indicating that the verification on the first identifier succeeds.

In some implementations, before obtaining the subscription information of the first terminal device in the first network based on the first identifier, the method further includes:
sending, to a core network element in the second network, a message used to request the external identifier of the first terminal device, where the core network element in the second network is configured to manage an external identifier of a terminal device belonging to the second network, and the second network is a network deployed by a home operator of the first terminal device; and receiving the external identifier of the first terminal device from the core network element; and that the verification on the first identifier succeeds includes: the external identifier of the first terminal device from the core network element includes the first identifier.

In some implementations, before obtaining the subscription information of the first terminal device in the first network based on the first identifier, the method further includes:
sending, to a core network element in the second network, a message used to request to verify a first subscription identifier, where the core network element in the second network is configured to manage an external identifier of a terminal device belonging to the second network, and the second network is a network deployed by a home operator of the first terminal device; and receiving a third response message from the core network element, where the third response message indicates a verification result of the first identifier; and that the verification on the first identifier succeeds includes: the third response message indicates that the verification on the first identifier succeeds.

In some implementations, before the verification on the first identifier succeeds, the method further includes:
performing authentication on the first terminal device based on a second identifier, where the second identifier is an identifier of the first terminal device in the second network, and the second network is the network deployed by the home operator of the first terminal device.

In some implementations, performing the authentication on the first terminal device based on the second identifier includes:
obtaining the second identifier of the first terminal device; sending a first authentication request message to the core network element in the second network, where the core network element in the second network is configured to perform authentication on a terminal device belonging to the second network, the first authentication request message is used to request to perform authentication on the first terminal device, and the first authentication request message includes the second identifier; receiving a first authentication response message from the core network element, where the first authentication response message includes first authentication information of the first terminal device; sending a second authentication request message to the first terminal device based on the first authentication information; receiving a second authentication response message from the first terminal device, where the second authentication response message includes second authentication information of the first terminal device; and when the first authentication information includes verification information, performing the authentication on the first terminal device based on the verification information of the first authentication information and the second authentication information; or sending a third authentication request message to the core network element, where the third authentication request message carries the second authentication information; and receiving a third authentication response message from the core network element, where the third authentication response message indicates an authentication result of the first terminal device.

When there is no roaming agreement between a home operator of the mobility management network element and a home operator of the first terminal device, the control plane network element in the first network may request, through a capability exposure interface, the home operator of the first terminal device to perform SIM authentication.

In some implementations, obtaining the second identifier of the first terminal device includes: obtaining the second identifier from the second request message; or sending a message used to request an identifier of the first terminal device in the second network; and receiving the second identifier.

In some implementations, before obtaining the subscription information of the first terminal device in the first network based on the first identifier, the method further includes: performing authentication on the first terminal device by using the first identifier.

In some implementations, performing, based on the first subscription identifier, the access authentication on the first terminal device to access the first network includes: when a preset condition is met, performing authentication on the first terminal device based on the first subscription identifier, where the preset condition includes at least one of the following conditions: the subscription information of the first terminal device in the first network requires that access authentication be performed on the first terminal device based on the first identifier, the second request message does not include the verified first identifier, the first identifier is a private identifier in the first network, or the control plane network element requires to perform authentication on a terminal device that accesses the first network based on the first identifier.

In some implementations, the second request message further includes fifth information, the fifth information indicates a location of the first terminal device, the subscription information of the first terminal device in the first network includes third indication information, and the third indication information indicates an area of the first network that is allowed to be accessed by the first terminal device.

Determining, based on the subscription information of the first terminal device in the first network, whether the first terminal device is allowed to access the first network includes:
when the location of the first terminal device is in the area indicated by the third indication information, determining that the first terminal device is allowed to access the first network.

In some implementations, the second request message further includes first information, the first information indicates a network slice and/or a logical network that the first terminal device in the first network requests to access, the subscription information of the first terminal device in the first network includes fourth indication information, and the fourth indication information indicates a network slice and/or a logical network that the first terminal device in the first network is allowed to access.

Determining, based on the subscription information of the first terminal device in the first network, whether the first terminal device is allowed to access the first network includes:
when the network slice and/or logical network that the first information requests to access is included in the network slice and/or the logical network that is allowed to access and that is indicated by the fourth indication information, determining the network slice and/or the logical network that the first terminal device in the first network is allowed to access.

In some implementations, the first response message further includes second information, and the second information indicates the network slice and/or logical network that the first terminal device in the first network is allowed to access.

In some implementations, the first response message includes a second terminal identifier, and the second terminal identifier indicates the first terminal device in the control plane network element.

In some implementations, the method further includes:
receiving a second session request message from the mobility management network element, where the second session request message is used to request to set up a session between the first terminal device and a first user plane network element in the first network, the second session request message includes first downlink tunnel information, the first downlink tunnel information is used to send downlink data of the session to a second user plane network element in a third network, and the third network is a network deployed by a home operator of the mobility management network element; sending a third session request message to the first user plane network element based on session subscription information of the first terminal device in the first network, where the third session request message is used to request the first user plane network element to allocate a message of second uplink tunnel information to the session; receiving the second uplink tunnel information from the first user plane network element, where the second uplink tunnel information is used to send the uplink data of the session to the first user plane network element; and sending a session response message to the mobility management network element, where the session response message indicates that a session is set up, and the session response message includes the second uplink tunnel information.

In some implementations, the second session request message further includes sixth information, the sixth information indicates an identifier of the network slice and/or logical network that the first terminal device in the first network requests to access, the session subscription information of the first terminal device in the first network includes fifth indication information, and the fifth indication information indicates the network slice and/or logical network that the first terminal device in the first network is allowed to access.

Sending the third session request message to the first user plane network element based on the session subscription information of the first terminal device in the first network includes:
when the network slice and/or logical network that the first terminal device requests to access in the sixth information is included in the network slice and/or logical network that the first terminal device is allowed to access and that is indicated by the fifth indication information, sending the third session request message to the first user plane network element.

In some implementations, the second session request message further includes information indicating the first user plane network element to filter out a non-allowed data packet.

By configuring a corresponding access rule, access of the first terminal device to a service in the first network can be controlled, thereby improving controllability of the first terminal device when accessing the first network.

In some implementations, the second session request message further includes the first identifier or the second terminal identifier.

Before sending the third session request message to the first user plane network element based on the session subscription information of the first terminal device in the first network, the method further includes:
obtaining the session subscription information of the first terminal device in the first network based on the first identifier or the second terminal identifier.

In some implementations, the third session request message further includes information indicating that the first terminal device is allowed to access the first service in the PLMN.

In some implementations, the method further includes:
sending the third session request message to a third user plane network element, where the third session request message is used to request the third user plane network element to allocate uplink tunnel information, the third session request message carries service information of the first PLMN and downlink tunnel information allocated by the first user plane network element, and the third user plane network element belongs to the first PLMN.

According to a fourth aspect, an embodiment of this application provides a communication method, applied to an access network device. The method includes:
receiving a first message from a first terminal device, triggering setup of a first connection based on the first message, where the first connection is a connection between the first terminal device and a first mobility management network element; and sending a first connection identifier to the first terminal device, where the first connection identifier indicates the first connection.

The first terminal device can determine a corresponding first mobility management network element based on the first connection identifier when subsequently exchanging NAS information.

In some implementations, the first message includes sixth indication information, and the sixth indication information indicates to set up a connection between the first terminal device and the first mobility management network element.

Triggering the setup of the first connection based on the first message includes: triggering the setup of the first connection based on the sixth indication information.

In some implementations, triggering the setup of the first connection based on the first message includes:
triggering the setup of the first connection when the first message does not include the first connection identifier.

In some implementations, triggering the setup of the first connection based on the first message includes:
triggering the setup of the first connection when the first message includes the first connection identifier, and the access network device does not store a correspondence between the first terminal device and the first connection identifier.

In some implementations, the method further includes: allocating the first connection identifier to the first connection; and sending the first connection identifier to the first terminal device.

In some implementations, the method further includes:
storing a correspondence between the first terminal device and the first connection identifier.

In some implementations, the first message further includes information indicating the first network.

The method further includes:
selecting the first mobility management network element based on the first message, where the first mobility management network element supports access of a terminal device to the first network.

In some implementations, the first message further includes a first NAS message, and the first NAS message is an access request message or a service request message.

In some implementations, the first connection is used to forward a message between the first terminal device and the first network.

The method further includes:
receiving a second message from the first terminal device, triggering setup of a second connection based on the second message, where the second connection is a connection between the first terminal device and a second mobility management network element, the second connection is used to forward a message between the first terminal device and a second network, and the second network and the first network are different networks; and sending a second connection identifier to the first terminal device, where the second connection identifier indicates the second connection.

The first terminal device separately accesses different subnets and macro networks through different mobility management network elements, so that subnet access and macro network access can be decoupled, thereby avoiding sharing of the mobility management network element and enhancing isolation between the subnet access and the macro network access.

In some implementations, before receiving the first message from the first terminal device and receiving the second message from the first terminal device, the method further includes:
setting up a third connection between the first terminal device and the access network device; receiving the first message from the first terminal device includes: receiving the first message from the first terminal device through the third connection; and receiving the second message from the first terminal device includes: receiving the second message from the first terminal device through the third connection.

In some implementations, the second message further includes a second NAS message, and the second NAS message is an access request message or a service request message.

In some implementations, the first connection is associated with at least one first user plane link, the second connection is associated with at least one second user plane link, the first user plane link is used to transmit user plane data between the first terminal device and the first network, and the second user plane link is used to transmit user plane data between the first terminal device and the second network.

The method further includes:
releasing the third connection, when the at least one first user plane link has no data transmission and the at least one second user plane link has no data transmission.

When there is no data to be sent, the first terminal device initiates entering an idle state, so that an air interface can be released, and energy of the first terminal device can be saved.

According to a fifth aspect, an embodiment of this application provides a communication method, applied to a first terminal device. The method includes:
sending a first message to an access network device, where the first message is used to trigger setup of a first connection, and the first connection is a connection between the first terminal device and a first mobility management network element; and receiving a first connection identifier from the access network device, where the first connection identifier indicates the first connection.

In some implementations, the first message includes sixth indication information, and the sixth indication information indicates to set up a connection between the first terminal device and the first mobility management network element.

In some implementations, sending the first message to the access network device includes:
allocating the first connection identifier to the first connection; and sending the first message to the access network device, where the first message includes the first connection identifier.

In some implementations, the first message further includes information indicating the first network, and the first mobility management network element supports connecting the terminal device to the first network.

In some implementations, the first message further includes a second NAS message, and the second NAS message is a registration request message or a service request message.

In some implementations, the first connection is used to forward a message between the first terminal device and the first network.

The method further includes:
sending a second message to the access network device, where the second message is used to trigger setup of a second connection, the second connection is a connection between the first terminal device and a second mobility management network element, the second connection is used to forward a message between the first terminal device and a second network, and the second network and the first network are different networks; and receiving a second connection identifier from the access network device, where the second connection identifier indicates the second connection.

In some implementations, sending the first message to the access network device includes:
sending the first message to the access network device through a third connection, where the third connection is a connection between the first terminal device and the access network device; and sending the second message to the access network device includes: sending the second message to the access network device through the third connection.

According to a sixth aspect, an embodiment of this application provides a communication apparatus. The communication apparatus includes functional modules configured to implement any communication method in the foregoing implementations. Optionally, each module may be implemented by software and/or hardware.

According to a seventh aspect, an embodiment of this application provides a communication apparatus, including a processor. The processor is coupled to a memory, and may be configured to execute instructions in the memory, to implement any communication method in the foregoing implementations. Optionally, the apparatus further includes the memory. Optionally, the apparatus further includes a communication interface, and the processor is coupled to the communication interface.

According to an eighth aspect, an embodiment of this application provides a computer-readable medium. The computer-readable medium stores program code executed by a device, and the program code includes any communication method in the foregoing implementations.

According to a ninth aspect, an embodiment of this application provides a computer program product, including a computer program. When the computer program is executed by a processor, any communication method in the foregoing implementations is implemented.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1 is a diagram of an architecture of a network architecture 100 according to an embodiment of this application;
FIG. 2 is a schematic flowchart of a communication method according to an embodiment of this application;
FIG. 3A to FIG. 3D are a schematic flowchart of a communication method according to an embodiment of this application;
FIG. 4A to FIG. 4C are a schematic flowchart of a communication method according to an embodiment of this application;
FIG. 5 is a schematic flowchart of requesting, by a subnet control plane network element, an AUSF/UDM network element to perform identity authentication according to an embodiment of this application;
FIG. 6 is a schematic flowchart of requesting, by a subnet control plane network element, an AUSF/UDM network element to perform identity authentication according to another embodiment of this application;
FIG. 7A and FIG. 7B are a schematic flowchart in which a terminal device simultaneously accesses a subnet and a macro network according to an embodiment of this application;
FIG. 8 is a diagram of a protocol stack of a terminal device according to an embodiment of this application;
FIG. 9A to FIG. 9C are a schematic flowchart in which a terminal device separately accesses a subnet and a macro network according to an embodiment of this application;
FIG. 10 is a diagram of a structure of a communication apparatus according to an embodiment of this application; and
FIG. 11 is a diagram of a structure of a communication apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

The technical solutions provided in embodiments of this application may be applied to various communication systems, for example, a new radio (new radio, NR) system, a long term evolution (long term evolution, LTE) system, a frequency division duplex (frequency division duplex, FDD) system, and a time division duplex (time division duplex, TDD) system. The technical solutions provided in embodiments of this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

In the foregoing communication systems, a part operated by an operator may be referred to as a public land mobile network (public land mobile network, PLMN), and is for providing a land mobile communication service. The PLMN may also be referred to as an operator network, a macro network, a public network (public network), or the like, and the operator that operates the PLMN may be referred to as a macro-network operator. The PLMN described in embodiments of this application may be specifically a network compliant with a requirement of the 3rd generation partnership project (3rd generation partnership project, 3GPP) standard, which is referred to as a 3GPP network for short. The 3GPP network includes but is not limited to a 5th-generation (5th-generation, 5G) mobile communication network, a 4th-generation (4th-generation, 4G) mobile communication network, and another future communication network, for example, a 6th-generation (6th-generation, 6G) mobile communication network.

As the 3GPP network develops from being to business (to business, 2B) toward being to consumer (to consumer, 2C), a series of emerging technologies emerge, to support deployment of a network in a specified location area (for example, a business, a campus, a shopping mall, or a park), provide a customized service for a user in the area, and implement continuous expansion of an application scenario of the 3GPP network. A network that serves a user in a specified location area may be referred to as a subnet (sub-network), the specified area may be referred to as a subnet site, a user that accesses the subnet in the subnet site may be referred to as a subnet user, an owner or a manager of the subnet site may be referred to as a subnet tenant, a service provided by the subnet for the subnet user may be referred to as a subnet service, and an operator that deploys the subnet may be referred to as a subnet operator. The subnet may also be referred to as a private network (private network), a dedicated network (dedicated network), or the like. This is not limited in embodiments of this application.

The subnet operator and a macro network operator may be the same or different. For example, the subnet tenant can directly entrust the macro network operator to deploy the subnet. In this case, the macro network operator is also the subnet operator of the subnet. Alternatively, the subnet tenant may entrust a third-party operator to deploy the subnet. In this case, the subnet operator of the subnet and the macro network operator are different network operators.

In the conventional technology, the macro network operator may deploy the subnet by using technologies such as slicing, multi-access edge computing (multi-access edge computing, MEC), and a local area data network (local area data network, LADN). However, in this case, only a subscriber of the macro network operator can access the subnet through an access network device deployed by the macro network operator, and a user belonging to another operator cannot access the subnet. The macro network operator may alternatively deploy the subnet by using a stand-alone non-public network (stand-alone non-public network, SNPN) technology. However, only a dedicated terminal device of the subnet, for example, a terminal device including a subscriber identity module (subscriber identity module, SIM) card of the subnet, or a terminal device that can receive a signal of a specific frequency band in the subnet, can access the subnet. Consequently, an application scope of the subnet is limited.

To resolve the foregoing technical problem, embodiments of this application provide a communication method and a related apparatus, to enable subnet users belonging to different network operators to access a same subnet, thereby meeting service requirements of the subnet users.

In embodiments of this application, a subnet selection list including subnet identification information is configured on a terminal device, and an access network device broadcasts identification information of a subnet supported by the access network device. The terminal device selects a subnet based on the subnet selection list and the broadcast identification information of the subnet, and requests the access network device to access the selected subnet, so that subnet users belonging to different operators can access a same subnet.

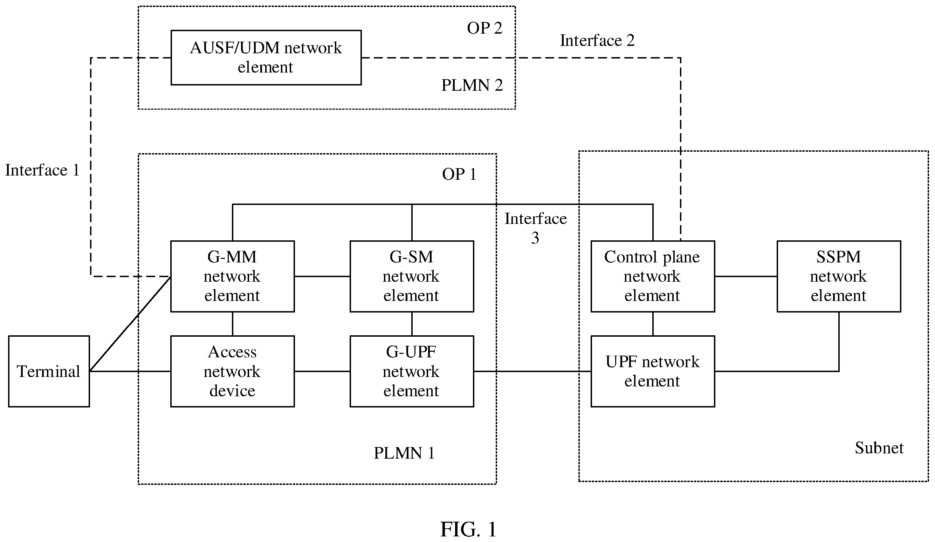

FIG. 1 is a diagram of a network architecture 100 according to an embodiment of this application. As shown in FIG. 1, the network architecture 100 includes a terminal, an access network device, a PLMN 1 deployed by a macro network operator (operator, OP) 1, a PLMN 2 deployed by a macro network operator OP 2, and a subnet deployed by a subnet operator.

The terminal may also be referred to as a terminal device, a user equipment (user equipment, UE), a mobile station (mobile station, MS), a mobile terminal (mobile terminal, MT), or the like, and may be an entity configured to receive or transmit a signal on a user side, for example, a mobile phone. The terminal device includes a handheld device, an in-vehicle device, a wearable device, or a computing device having a wireless communication function. For example, the terminal device may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in smart grid, a wireless terminal in smart city (smart city), a wireless terminal in smart home (smart home), or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. A specific technology and a specific device form that are used by the terminal device are not limited in embodiments of this application.

The access network device is deployed by the operator OP 1 and is located in a subnet site, and a signal of the access network device can cover the subnet site. The access network device includes but is not limited to a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, and the like.

The terminal device may access the subnet through the access network device deployed by the OP 1. Therefore, the access network device deployed by the OP 1 may also be referred to as a subnet access network device. The terminal device may also access, through the access network device, the PLMN 1 deployed by the OP 1. In other words, the subnet and the PLMN 1 deployed by the OP 1 share the access network device.

The PLMN 1 may include one or more of the following core network elements: a global mobility management (global mobility management, G-MM) network element, a global session management (global session management, G-SM) network element, and a global user plane function (global user plane function, G-UPF) network element. The PLMN 1 may include a dedicated core network element that provides a service only for the subnet shown in FIG. 1, or may include a shared core network element that provides a service for another subnet or even a macro network service of the OP 1.

The G-MM network element is mainly responsible for access authentication, access authorization, and mobility management of the terminal device. The G-MM network element may be an access and mobility management function (access and mobility management function, AMF) network element in a 5G communication system. The G-SM network element is configured to support access of the terminal device, and is responsible for collecting statistics on and monitoring macro network resources used by the terminal device to access the subnet, for example, a resource usage and access duration. The G-SM network element may be a session management function (session management function, SMF) network element in the 5G communication system. The G-UPF network element is responsible for forwarding a service data packet of the subnet between the terminal device and the subnet, and may be further configured to collect charging information related to the subnet, such as traffic. The G-UPF network element may be a user plane function (user plane function, UPF) network element in the 5G communication system.

The OP 2 is a home operator of the terminal device (or the OP 2 is a home operator of a SIM card/embedded SIM (embedded-SIM, eSIM) card included in the terminal device). Therefore, subscription data between the terminal device and the OP 2 is stored by a core network element in the PLMN 2. For example, a unified data management (unified data management, UDM) network element in the PLMN 2 stores subscription data (for example, a key) of the terminal device.

The core network element in the PLMN 2 may include an authentication server function (authentication server function, AUSF) network element and a UDM network element. The UDM network element is mainly responsible for managing a user identifier, subscription data, and authentication data. The AUSF network element is configured to receive a request from the G-MM network element for performing identity authentication on the terminal device, and perform authentication on the terminal device by requesting an authentication vector from the UDM network element.

The subnet operator is responsible for subnet deployment. In a possible implementation, the subnet operator is the same as the macro network operator. For example, the operator OP 1 is the subnet operator, the subnet tenant signs a subnet deployment agreement with the OP 1, and the OP 1 deploys the subnet for the subnet tenant. In another possible implementation, the subnet operator is independent of the macro network operator. For example, the subnet tenant signs a deployment agreement with the subnet operator, and the subnet operator leases a resource from the OP 1 to deploy the subnet, for example, leases an access network device and a core network device of the OP 1.

The subnet further includes a control plane network element in the subnet, a subnetwork subscription and policy management (subnetwork subscription and policy management, SSPM) network element, and a UPF network element. The control plane network element is equivalent to a comprehensive network element that integrates functions such as access authentication, access authorization, mobility management, session management, and authentication services. The SSPM network element is responsible for managing subscription data and policies of the terminal device and the subnet. The UPF network element in the subnet is responsible for forwarding user plane data between the terminal device and the subnet service. The foregoing network elements in the subnet may be resident-deployed in a campus of the subnet tenant, or may be deployed in an equipment room of an operator that manages the subnet, or may be deployed in an equipment room of the OP 1.

According to the network architecture 100 in FIG. 1, when accessing the subnet, the terminal device may request the AUSF/UDM network element in the PLMN 2 to which the terminal device belongs to perform identity authentication, and the control plane network element in the subnet performs access authorization on the terminal device.

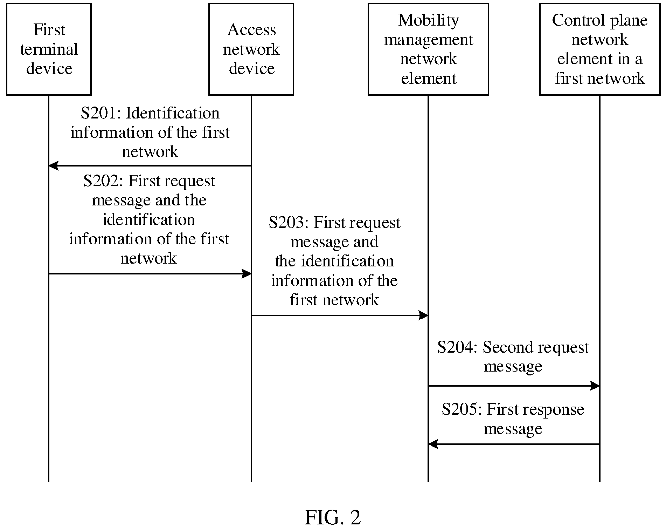

FIG. 2 is a schematic flowchart of a communication method according to an embodiment of this application. As shown in FIG. 2, the communication method may include S201 to S205.

S201: An access network device sends identification information of a first network to a first terminal device. Correspondingly, the first terminal device receives the identification information of the first network from the access network device.

In an example, the access network device may send the identification information of the first network in a broadcast manner. The access network device has a capability of connecting the terminal device to the first network, and the first network may be a non-PLMN network.

The first terminal device is located in a subnet site covered by a broadcast signal of the access network device. Therefore, the first terminal device may receive the identification information of the first network that is broadcast by the access network device.

S202: When a first list in the first terminal device includes the identification information of the first network, the first terminal device sends a first request message and the identification information of the first network to the access network device, where the first request message is used to request access of the first terminal device to the first network. Correspondingly, the access network device receives the first request message and the identification information of the first network from the first terminal device.

In an example, the first list is configured in the first terminal device, and the first list includes identification information of one or more non-PLMNs, or the first list includes identification information of at least one subnet. The subnet in this application is a non-PLMN network.

That the first list includes the identification information of the first network may indicate that the first network is a subnet that has a subscription relationship with the first terminal device, or the first network is a subnet that is free of subscription for all subscribers. Therefore, the first terminal device may access the first network. In this case, the first terminal may send the first request message and an identifier of a first network device to the access network device, where the first request message is used to request the access network device to admit the first terminal device to the network, and the identification information of the first network indicates the access network device t to admit the first terminal device to the network.

It should be noted that "registering with a network" and "accessing a network" mentioned in this embodiment of this application may have a same meaning.

S203: The access network device sends the first request message and the identification information of the first network to a mobility management network element. Correspondingly, the mobility management network element receives the first request message and the identification information of the first network from the access network device.

In this embodiment, the mobility management network element is a network element that is in a PLMN and that is responsible for access authentication, access authorization, and mobility management of the terminal device.

After receiving the first request message and the identification information of the first network, the access network device may determine the mobility management network element of the first terminal device based on the identification information of the first network, and send the first request message and the identification information of the first network to the mobility management network element.

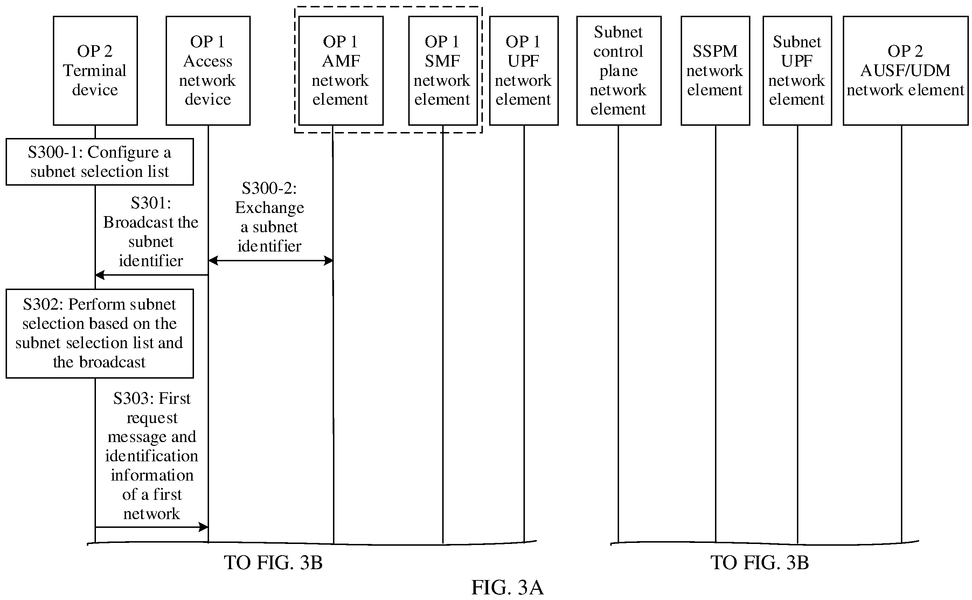

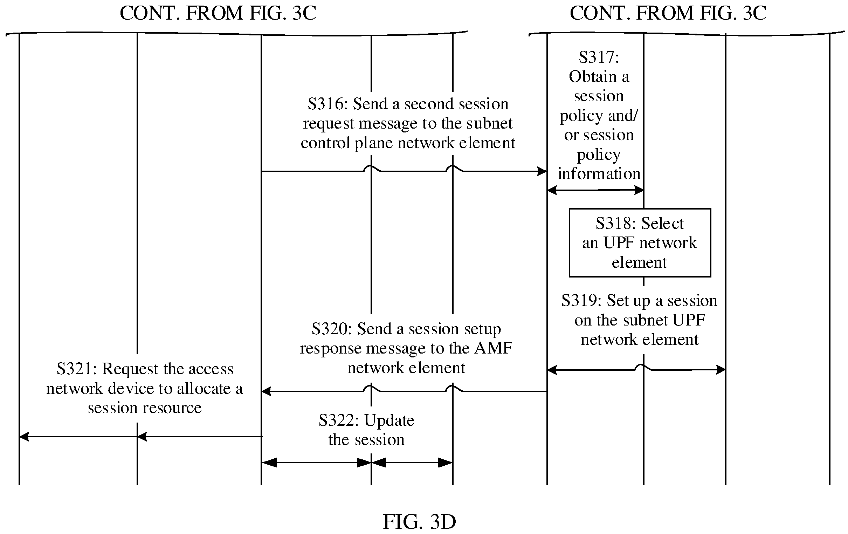

For an implementation in which the access network device determines the mobility management network element based on the identification information of the first network, refer to step S304 in the embodiment shown in FIG. 3A to FIG. 3D. Details are not described herein again.

S204: The mobility management network element sends a second request message to a control plane network element in the first network based on the identification information of the first network, where the second request message is used to request access of the first terminal device to the first network. Correspondingly, the control plane network element in the first network receives the second request message from the mobility management network element.

For example, the mobility management network element may learn of an association relationship between a control plane network element and an identifier of a network to which the control plane network element belongs, so that the mobility management network element may determine, as the control plane network element in the first network, a control plane network element associated with the received identification information used to identify a network.

The control plane network element in the first network is responsible for authorization of the terminal device to access the first network.

S205: The control plane network element sends a first response message to the mobility management network element, where the first response message indicates whether the first terminal device is allowed to access the first network. Correspondingly, the mobility management network element receives the first response message from the control plane network element.

In this embodiment, the control plane network element determines, based on subscription information of the first terminal device in the first network, whether the first terminal device is allowed to access the first network. When access is allowed, the first terminal device is authorized to access the first network.

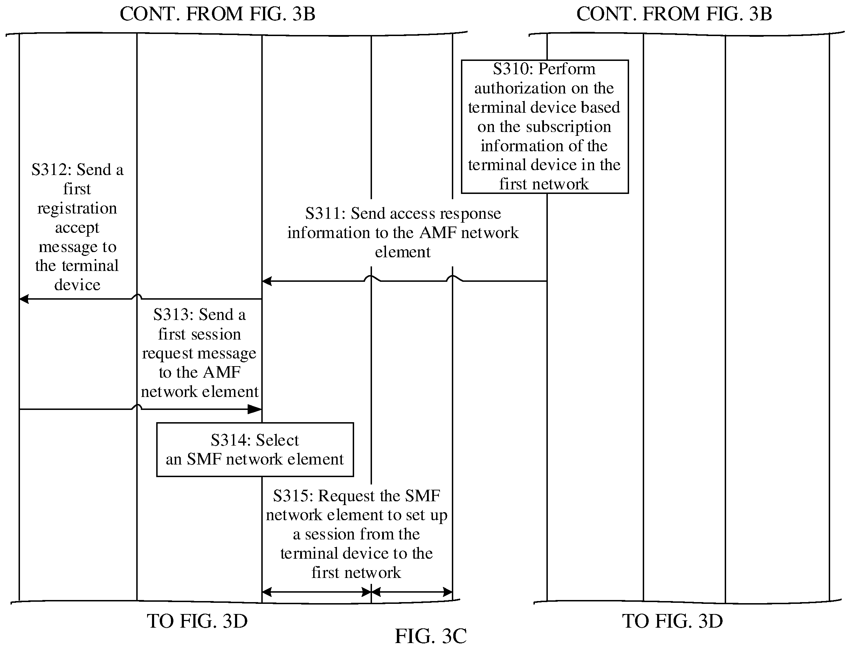

For an example implementation in which the control plane network element determines, based on the subscription information of the first terminal device in the first network, whether the first terminal device is allowed to access the first network, refer to step S310 in the embodiment shown in FIG. 3C. Details are not described herein again.

After determining whether the first terminal device is allowed to access the first network, the control plane network element may indicate, to the mobility management network element by using the first response message, whether the first terminal device is allowed to access the first network.

In this embodiment, when the first list includes the identification information of the first network broadcast by the access network device, the first terminal device may directly select, without considering a home macro network operator of the first terminal device, a cell of a subnet access network device for access, and share the same access network device with a terminal device belonging to another macro network operator.

It may be understood that the communication method provided in this embodiment may be applied to the network architecture 100 shown in FIG. 1. For example, the first terminal device may be a terminal device in the architecture, the first network may be a subnet in the architecture, the mobility management network element may be a G-MM network element or an AMF network element in the 5G communication system, and the control plane network element in the first network may be a control plane network element in the subnet.

The embodiment shown in FIG. 2 reflects the technical solutions provided in embodiments of this application. When a subnet is accessed by using the foregoing communication method, other network elements in the network architecture 100 further need to participate. The following describes a specific subnet access procedure.

FIG. 3A to FIG. 3D are a schematic flowchart of a communication method according to an embodiment of this application. The communication method provided in this embodiment may be applied to the network architecture 100 shown in FIG. 1. For example, a terminal device is used as a first terminal device, an AMF network element is used as a mobility management network element, an OP 1 provides a resource for subnet deployment, an OP 2 is a home operator of the terminal device, and the communication method in FIG. 2 is further described in a 5G communication scenario. As shown in FIG. 3A to FIG. 3D, the method specifically includes the following steps.

S300-1: A terminal device configures a subnet selection list.

The subnet selection list is a first list, the subnet selection list includes a subnet identifier of at least one subnet, and the subnet identifier is equivalent to an identity of the subnet. A corresponding unique subnet may be determined based on the subnet identifier. All subnets corresponding to the subnet identifiers in the subnet selection list are subnets that have a subscription relationship with the terminal device or subnets that have a subscription relationship with all subscribers. In other words, the subnet selection list indicates subnets that the terminal device can access, and the terminal device selects, based on the subnet identifiers in the subnet selection list, a subnet that the terminal device expects to access.

In some implementations, the subnet selection list can indicate a priority of the terminal device to select a subnet. In an example, subnet identifiers in the subnet selection list are sorted based on priorities of corresponding subnets.

It should be noted that, when the terminal device subscribes to a subnet, a subnet subscription identifier further needs to be configured. The subnet subscription identifier is equivalent to an identity of the terminal device in the subnet. The subnet may determine a corresponding terminal device based on the subnet subscription identifier. The terminal device stores a subnet subscription identifier corresponding to each subnet, that is, stores a correspondence between a subnet identifier and a subnet subscription identifier. In an example, the subnet subscription identifier may be a mobile station international ISDN number (mobile station international ISDN number, MSISDN) of the terminal device, where ISDN is short for an integrated service digital network (integrated service digital network), and the MSISDN may be simply understood as a telephone number in daily life. The subnet subscription identifier may also be an international mobile subscriber identity (international mobile subscriber identity, IMSI) of the terminal device, and in the 5G era, may also correspond to a subscription permanent identifier (subscription permanent identifier, SUPI) or a subscription concealed identifier (subscription concealed identifier, SUCI) of the terminal device. For some subnets, the subnet subscription identifier may also be a unique identifier of the terminal device in a corresponding subnet. For example, an employee ID of the terminal device in an enterprise may be used as a subnet subscription identifier corresponding to the terminal device in an enterprise subnet.

It may be understood that the terminal device may use a same subnet subscription identifier in different subnets. For example, the terminal device may use an MSISDN as a subnet subscription identifier in a subnet A, and the terminal device may further use a same MSISDN as a subnet subscription identifier in a subnet B. The subnet A and the subnet B share a same MSISDN of the terminal device. It should be noted that one IMSI of the terminal device may correspond to a plurality of MSISDNs. When different subnets use different MSISDNs as subnet subscription identifiers, the terminal device needs to store correspondences between all MSISDNs used as subnet subscription identifiers and corresponding subnets. For example, the IMSI of the terminal device corresponds to an MSISDN 1 and an MSISDN 2. The terminal device uses the MSISDN 1 as a subnet subscription identifier of a subnet A, and uses the MSISDN 2 as a subnet subscription identifier of a subnet B. The terminal device needs to separately store a correspondence between the MSISDN 1 and the subnet A and a correspondence between the MSISDN 2 and the subnet B.

The terminal device may configure the subnet selection list and the subnet subscription identifier at delivery, or may manually configure the subnet selection list and the subnet subscription identifier, or receive the subnet selection list and the subnet subscription identifier in a signaling manner when subscribing to a subnet, and the terminal device stores the subnet selection list and the subnet subscription identifier.

In a possible implementation, to support a subnet, a subnet logical interface, namely, a first logical interface, is added to the terminal device, and the subnet logical interface is configured to admit the terminal device to the subnet. Correspondingly, for the subnet selection list and the subnet logical interface, the subnet logical interface is configured with the subnet selection list. When different subnets correspond to different subnet subscription identifiers, the subnet subscription identifier may be included in the subnet selection list as a field.

S300-2: An access network device exchanges a subnet identifier with an AMF network element.

Both the access network device and the AMF network element may support one or more different subnets. Therefore, the access network device and the AMF network element may configure subnet identifiers corresponding to subnets supported by the access network device and the AMF network element, and exchange the configured subnet identifiers during initial signaling exchange (for example, an "NG Setup" process).

There is no strict sequence between the steps S300-1 and S300-2. An execution sequence of the two steps may be randomly changed.

S301: The access network device broadcasts the subnet identifier. Correspondingly, the terminal device receives the subnet identifier from the access network device.

The terminal device can access a subnet only through the access network device. Considering that the access network device supports one or more different subnets, that is, one or more subnets share a same access network device, the access network device broadcasts, to the terminal device, a subnet identifier corresponding to each subnet supported by the access network device, so that the terminal device subsequently performs subnet selection, thereby reducing unnecessary attempts and improving access efficiency. It may be understood that, in addition to supporting the subnet, a subnet access network device also supports a macro network service. Therefore, the access network device further broadcasts, to the terminal device, a PLMN ID supported by the access network device.

S302: The terminal device performs subnet selection based on the subnet selection list and the subnet identifier broadcast by the access network device.

In this step, a dedicated subnet logical interface that is on the terminal device and that is used to access a subnet matches the subnet selection list based on the subnet identifier broadcast by the access network device. If a subnet identifier that is in the subnet selection list and that is the same as the subnet identifier broadcast by the access network device exists, it indicates that the terminal device can access, through the access network device, a subnet corresponding to the subnet identifier. Both the subnet identifier broadcast by the access network device and the subnet identifier in the subnet selection list include an identifier of a first network, and the first network is a subnet that the access network device supports the terminal device to access.

In some implementations, when the first logical interface is in an enabled state, the terminal device performs subnet selection based on the subnet selection list and the subnet identifier broadcast by the access network device. In an example, when the first logical interface is in an enabled state, and the subnet selection list includes the identification information of the first network broadcast by the access network device, the terminal device selects the first network as a to-be-accessed subnet, and sends the first request message and the identification information of the first network in step S303.

In some implementations, a subnet switch may be further added to the terminal device, and the subnet switch is configured to control enabling or disabling of the first logical interface. An operator of the terminal device may turn on the subnet switch when the terminal device approaches a subnet site, to avoid unnecessary energy consumption caused by network search performed by the terminal device when the terminal device cannot access the subnet, and save energy for the terminal device.

In some implementations, when there are a plurality of subnet identifiers that are the same as the subnet identifier broadcast by the access network device in the subnet selection list, the terminal device selects, from the plurality of same subnet identifiers based on priorities indicated by the subnet identifiers in the subnet selection list, a subnet indicated by a subnet identifier with a highest priority as the to-be-accessed subnet.

S303: The terminal device sends the first request message and the identification information of the first network to the access network device. Correspondingly, the access network device receives the first request message and the identification information of the first network from the terminal device.

The first request message is used to request to register the terminal device with the first network (or connect the terminal device to the first network), and the first network is a subnet selected by the terminal device from the subnet selection list and broadcast by the access network device in step S302. It should be noted that, when there are a plurality of accessible subnets in step S302, the terminal device selects the first network from the plurality of accessible subnets.

In an example, the terminal device receives identification information of a third network broadcast by the access network device, where both the identification information of the third network and the identification information of the first network are included in the first list, and a priority of the first network is higher than a priority of the third network. Therefore, the terminal device sends the first request message and the identification information of the first network to the access network device.

In some implementations, the first request message further includes a first identifier and/or a second identifier. The first identifier is a subnet subscription identifier of the terminal device in the first network, and is a corresponding identifier allocated by the first network to the terminal device. The first identifier can uniquely indicate, in the first network, a terminal device corresponding to the first identifier. The second identifier is an identifier of the terminal device in the second network, the second network is a PLMN network deployed by a home operator OP 2 of the terminal device, and an identifier of the terminal device in the second network is any one of an SUPI, an SUCI, or an IMSI. It may be understood that the second identifier includes a PLMN ID, and a home operator of the terminal device may be determined based on the PLMN ID included in the second identifier.

It should be noted that the terminal device may be loaded with a plurality of SIM cards that belong to different operators. Correspondingly, the terminal device includes a plurality of logical interfaces for accessing a macro network, and each of the plurality of logical interfaces for accessing the macro network is in a one-to-one correspondence with a different SIM card. Therefore, each logical interface for accessing the macro network is associated with a second identifier indicated by a corresponding SIM card, and the logical interface for accessing the macro network is a second logical interface. For example, the terminal device is loaded with a SIM 1 and a SIM 2, where the SIM 1 belongs to an operator A, and the SIM 2 belongs to an operator B. This indicates that the terminal device is a subscriber of both the operator A and the operator B. The terminal device includes a macro network logical interface 1 and a macro network logical interface 2. The macro network logical interface 1 is associated with the SIM 1, and the macro network logical interface 2 is associated with the SIM 2. The terminal device may obtain, through the macro network logical interface 1, an identifier of the terminal device in a network deployed by the operator A, and may obtain, through the macro network logical interface 2, an identifier of the terminal device in a network deployed by the operator B.

During specific implementation, the macro network logical interface and a subnet logical interface may correspond to different physical modems (modems), or may share one physical modem (for example, share a physical modem in a time-sharing manner).

In some implementations, when the first logical interface on the terminal device configured to access the subnet is associated with the second logical interface configured to access the macro network, or when the first network is associated with the second logical interface configured to access the macro network, the terminal device can determine the second identifier through the associated second logical interface configured to access the macro network, so that the terminal device directly sends the second identifier to the access network device or carries the second identifier in the first request message.

It should be noted that the subnet selection list may further include first indication information, where the first indication information indicates that the first logical interface configured to access the subnet is associated with the second logical interface configured to access the macro network, or the first indication information indicates that the first network is associated with the second logical interface configured to access the macro network. When the terminal device registers with the first network, the second identifier is used for identity authentication. Therefore, the first indication information may further indicate or be used to trigger the terminal device to send the second identifier when the terminal device requests to register with the first network. When the subnet selection list configured by the terminal device includes the first indication information, the terminal device may carry the second identifier in the first request message based on the first indication information.

In a possible implementation, in step S303, the terminal device may further directly send the first identifier and/or the second identifier to the access network device.

S304: The access network device selects an AMF network element based on the subnet identifier.

It can be learned from step S300-2 that the access network device determines, through signaling exchange, that different AMF network elements support different subnets. Therefore, on the premise that it is determined that the terminal device needs to access and register with the first network, the access network device needs to select, from a plurality of AMF network elements based on subnet identification information corresponding to the first network, an AMF network element that supports the first network.

In some implementations, the access network device may further query a network repository function (network repository function, NRF) network element or a domain name system (domain name system, DNS) based on the subnet identifier corresponding to the first network, to select the AMF network element that supports the first network.

S305: The access network device sends the first request message and the identification information of the first network to the AMF network element. Correspondingly, the AMF network element receives the first request message and the identification information of the first network from the access network device.

S306: The AMF network element requests an AUSF/UDM network element deployed by a home operator of the terminal device to perform identity authentication.

In this step, to perform identity authentication on the terminal device, the AMF network element needs to obtain the second identifier of the terminal device, for example, an SUCI or an SUPI of the terminal device. In some implementations, the first request message in step S303 includes the second identifier, and the second identifier may be an SUPI/SUCI of the terminal device, or the second identifier sent by the terminal device to the access network device is an SUPI/SUCI corresponding to the terminal device.

If the first request message does not carry the second identifier, or the AMF network element does not receive the second identifier of the terminal device, the AMF network element may send first information to the terminal device, where the first information is used to request to obtain an identifier of the terminal device in the second network. In an example, the AMF network element sends an ID identity (identity document, ID) request to the terminal device, to request to obtain an SUPI/SUCI of the terminal device associated with the first network or the first logical interface.

It should be noted that, because the SUPI/SUCI is an identifier allocated by a network operator to a SIM card, identity authentication performed on the terminal device based on the SUPI/SUCI is also referred to as SIM authentication.

After determining that a home operator indicated by the terminal device is the OP 2, the AMF network element sends a first authentication request message to an AUSF/UDM network element in the macro network deployed by the OP 2, where the first authentication request message includes the SUPI/SUCI of the terminal device, and the first authentication request message is used to request to authenticate whether the terminal device is a subscriber of the OP 2. After the AUSF/UDM network element deployed by the OP 2 receives the first authentication request message, the AUSF/UDM network element generates an authentication vector based on the SUPI/SUCI, and sends a first authentication response message to the AMF network element, where the message includes the authentication vector. Subsequently, the AMF network element further exchanges with the terminal device and the AUSF/UDM network element according to an existing identity authentication method. If the authentication vector includes verification information, the AMF network element may determine, through local verification after receiving an authentication response of the terminal device, whether the terminal device is the subscriber of the OP 2. Otherwise, the AMF network element can only send the authentication response of the terminal device to the AUSF/UDM network element, and receive response information from the AUSF/UDM network element to indicate authentication success or authentication failure.

It may be understood that the AMF network element actually first sends a request for performing identity authentication to the AUSF network element, and the AUSF network element requests an authentication vector from the UDM network element, and the AUSF network element performs authentication on the terminal device based on the authentication vector. In the foregoing procedure, both the AUSF network element and the UDM network element, which are core network elements in the second network OP 2, participate in identity authentication. Therefore, in this embodiment of this application, the AUSF/UDM network element is requested to perform identity authentication.

If identity authentication of the terminal device succeeds in this step, that is, the AUSF/UDM network element deployed in the OP 2 in the second network performs authentication on the terminal device as the subscriber of the OP 2, step S307 continues to be performed in the communication method provided in this embodiment, and the AMF network element sends the second request message to the control plane network element in the first network. Otherwise, it indicates that identity authentication of the terminal device fails, the terminal device cannot access the first network, and the AMF network element rejects access of the terminal device (that is, sends a registration rejection message to the terminal device).

S307: The AMF network element sends a second request message to a subnet control plane network element. Correspondingly, the subnet control plane network element receives the second request message from the AMF network element.

In the foregoing step, it is determined, based on the subnet identifier, to register the terminal device with the first network (or connect the terminal device to the first network). Therefore, the subnet control plane network element in this step is a control plane network element in the first network, and the second request message is used to request access of the terminal device to the first network.

In some implementations, the second request message may carry an indication indicating that identity authentication has been performed, and the AMF network element may transfer, to the control plane network element in the first network by using the indication, information indicating that the terminal device has reliability.

When the first request message in step S303 includes the first identifier of the terminal device, correspondingly, the second request message may also include the first identifier of the terminal device.

Optionally, when the first identifier of the terminal device is an external identifier of the terminal device such as an MSISDN, before step S307, the communication method in this embodiment may further include the following step S307-0.

S307-0: Check whether a first subnet subscription identifier is a valid external identifier.

On a basis that identity authentication for the terminal device by using the OP 2 succeeds, for example, whether the first subnet subscription identifier is a valid external identifier may be verified in two manners. One manner is as follows.

The AMF network element requests, from a UDM network element deployed by the OP 2, to obtain the external identifier of the terminal device. If the external identifier of the terminal device includes the first identifier carried in a first registration request message, the first identifier is successfully verified, indicating that the first identifier is a valid external identifier.

The second manner is as follows.

The AMF network element sends the first subnet subscription identifier carried in the first registration request message to the UDM network element deployed by the OP 2, and requests the UDM network element to verify whether the first subnet subscription identifier is a valid external identifier. The AMF network element indicates a verification result by using response information sent by the UDM network element.

It may be understood that when whether the first identifier is a valid external identifier is verified, the AMF network element can send the second request message to the subnet control plane network element only when determining that the first identifier is a valid external identifier.

In some implementations, when the first subnet subscription identifier in the first registration request message is verified as a valid external identifier, the second request message may further carry a verification indication message, and the verification indication message indicates that the first subnet subscription identifier has been verified. In an implementation, a verified external identifier field (different from the first identifier sent by the terminal device in the first request message) may be carried in the second request message as verification indication information.

In some implementations, after identity authentication for the terminal device succeeds, the AMF network element may obtain the external identifier of the terminal device from the second network deployed in the OP 2, and carry the external identifier in the second request message. The external identifier is the first identifier of the terminal device.

It should be noted that, in the foregoing two manners, the AMF network element may directly exchange with the UDM network element deployed in the OP 2. In some implementations, the AMF network element may alternatively exchange with the AUSF network element deployed in the OP 2, and the AMF network element indirectly exchanges with the UDM network element by using the AUSF network element, to verify whether the first subnet subscription identifier is a valid external identifier.

The subnet subscription identifier of the terminal device in the first network is a basis for the control plane network element in the first network to further determine that the terminal device is in contact with the first network. When the first subnet subscription identifier is an external identifier of the terminal device, whether the first subnet subscription identifier is valid is verified, so that a subsequent access authentication procedure can be omitted, thereby improving efficiency.

In some implementations, the AMF network element may allocate a first terminal identifier to the terminal device, where the first terminal identifier indicates the terminal device in the AMF network element. In an example, the first terminal identifier is a context identifier or a temporary identifier of the terminal device, and indicates a context of the terminal device in the AMF network element. The AMF network element may determine a unique terminal device based on the context of the terminal device. The second request message may further include the first terminal identifier of the terminal device. In a subsequent access procedure, when the subnet control plane network element performs signaling exchange with the AMF network element, the first terminal identifier may be carried. The AMF network element can locate a context of a corresponding terminal device based on the first terminal identifier. The first terminal identifier may be used to protect security and privacy of the terminal device when the AMF network element performs signaling exchange with the subnet control plane network element, for example, to avoid leaking SIM card information (for example, an SUPI) of the terminal device to the subnet.

S308: The subnet control plane network element obtains the subscription information of the terminal device in the first network.

In this step, the control plane network element in the first network requests, from an SSPM network element based on the first identifier of the terminal device, to obtain the subscription information between the terminal device and the first network.

In another possible implementation, the first network is an open subnet in a public scenario like a shopping mall or a cinema. In this case, there is no subscription relationship between the terminal device and the first network. Therefore, the second request message does not include the subnet subscription identifier of the terminal device in the first network. Correspondingly, the first network has default subscription information, and the default subscription information is intended for all terminal devices that expect to access the first network. Therefore, the control plane network element in the first network may directly obtain the default subscription information, and the default subscription information is equivalent to subscription information of the terminal device in the first network.

S309: The subnet control plane network element performs access authentication on the terminal device.

In this step, the control plane network element in the first network verifies an identity of the terminal device based on the first identifier of the terminal device.

If the second request message does not carry the subnet subscription identifier of the first identifier of the terminal device in the first network, in a possible implementation, the control plane network element may request the terminal device to obtain the subnet subscription identifier of the terminal device in the first network.

In an example of access authentication, in a process of subnet access authentication, the control plane network element may generate an access authentication message based on a first identifier subnet subscription identifier, and transfer the access authentication message to the terminal device through the AMF network element. The access authentication message carries a random number. The terminal device calculates the random number in the access authentication message based on a locally stored key or a certificate shared with the first network, to obtain a calculation result. The terminal device transfers the calculation result to the control plane network element through the AMF network element. The control plane network element calculates the random number in the access authentication message based on a key shared with the terminal device. If an obtained calculation result matches the calculation result returned by the terminal device, it indicates that the access authentication succeeds. In other words, the control plane network element authenticates that the terminal device has a subscription relationship with the first network.

In some implementations, the control plane network element initiates access authentication to the terminal device only when a preset condition is met. The preset condition includes at least one of the following conditions: The first identifier of the terminal device is a private identifier in the first network, the subscription information of the terminal device in the first network requires to perform access authentication on the terminal device, the second request message does not include the first identifier, or the control plane network element requires to perform access authentication on all terminal devices that request to access the first network.

When the second request message in step S307 does not carry the first identifier of the terminal device, step S309 may be performed before step S308. To be specific, the control plane network element first requests to obtain the subnet subscription identifier of the terminal device in the first network from the terminal device, and after the control plane network element performs access authentication on the terminal device, the control plane network element obtains the subscription information of the terminal device in the first network after the access authentication succeeds.

It should be noted that, if the first identifier of the terminal device is an external identifier, an execution logic of the communication method in this embodiment is as follows. In a possible implementation, after the terminal device succeeds in the identity authentication in step S306, the second request message may carry an indication indicating that the first subnet subscription identifier has been verified. In this case, step S309 is an optional step. In another possible implementation, the control plane network element in the first network directly performs access authentication on the terminal device based on the first identifier of the terminal device. In this case, step S306 is an optional step. In this implementation, if the control plane network element in the first network requires to verify whether the first subnet subscription identifier is a valid external identifier, because the external identifier of the terminal device is stored in the UDM network element deployed by the OP 2, the terminal device needs to succeed in the identity authentication before performing the verification method in step S307-0. In this case, step S306 is a mandatory step. In still another possible implementation, configuration information is preconfigured in the AMF network element, and the configuration information indicates that when the terminal device requests to access any subnet or access the specified first network, identity authentication needs to be performed on the terminal device. In this implementation, step S306 is also a mandatory step.

If the first identifier of the terminal device is a private identifier in the first network based on an indication of the preset condition, an execution logic of the communication method in this embodiment is as follows. The control plane network element in the first network directly authenticates the terminal device based on the first identifier of the terminal device. In this case, step S306 is an optional step. In addition, in step S309, whether the first identifier is a valid private identifier may be further verified synchronously.

S310: The subnet control plane network element performs authorization on the terminal device based on the subscription information of the terminal device in the first network.

It can be learned from step S308 that the default subscription information in the first network is intended for all terminal devices that expect to access the first network and that have no subscription to the first network. Therefore, the default subscription information is equivalent to subscription information of these terminal devices in the first network.

In this step, the subscription information of the terminal device in the first network indicates a condition for allowing the first network to authorize the terminal device to access the first network. In an example, the subscription information of the terminal device in the first network includes any one of the foregoing information such as a cell list, an access network device list, and a tracing area identity (tracing area identity, TAI) that are allowed to be accessed by the terminal device in the first network. The control plane network element matches location information of the terminal device with location area information that is allowed to be accessed and that is indicated by the subscription information. If the location information of the terminal device is included in the foregoing area, the control plane network element authorizes access of the terminal device.

When the terminal device sends the first request message to the access network device, the access network device may obtain current location information of the terminal device. Optionally, the current location information of the terminal device may be carried in the second request message in step S307. In some implementations, if the second request message does not carry the current location information of the terminal device, the control plane network element may request the access network device to obtain the information. In some implementations, the first request message in step S303 further includes second information, and the second information is used by the terminal device in the first network to request to access a logical network and/or a network slice. Correspondingly, the second request message includes an access request of the terminal device for the logical network and/or the network slice. The subscription information of the terminal device in the first network includes information about a logical network and/or a network slice that is allowed to be accessed by the terminal device in the first network. If an access request of the terminal device for the logical network or the network slice that is carried in the second request message matches content in the subscription information, in other words, when the subscription information of the terminal device in the first network indicates that the logical network and/or the network slice that is allowed to be accessed by the terminal device in the first network include/includes the logical network and/or the network slice that the terminal device requests to access, the control plane network element authorizes access of the terminal device.

The logical network or the network slice is equivalent to dividing the first network into network areas that provide different services. Different network areas correspond to different access permissions. Only when the subscription information of the terminal device in the first network indicates that the terminal device has an access permission, the terminal device can access a target network area of the terminal device. For example, the first network is divided into a network area A and a network area B based on service classification, where an access permission requirement of the network area A is higher than that of the network area B. Subscription information of the terminal device in the first network indicates that the terminal device can access only the network area B at most. Therefore, when the terminal device requests to access the network area A in an access request message, authorization of the terminal device cannot be approved, and the terminal device fails to access the first network.

S311: The subnet control plane network element sends access response information to the AMF network element. Correspondingly, the AMF network element receives the access response information from the subnet control plane network element.

If the terminal device is authorized to access the first network in step S311, the access response information sent by the control plane network element in the first network to the AMF network element indicates that the terminal device is allowed to access the first network.

In some implementations, when the first network authorizes the terminal device to access the network slice and/or the logical network in step S310, the access response information may further carry related information about the network slice and/or the logical network that the terminal device is allowed to access.

In some implementations, after the authorization and authentication of the terminal device by the control plane network element succeeds in step S310, the control plane network element may allocate a second terminal identifier to the terminal device, where the second terminal identifier indicates the terminal device in the control plane network element. In an example, the second terminal identifier is a context identifier of the terminal device, and indicates a context of the terminal device in the control plane network element. The control plane network element may determine a unique terminal device based on the context of the terminal device. In a possible implementation, the second terminal identifier may alternatively be a temporary identifier of the terminal device. When the second terminal identifier is the temporary identifier, the control plane network element registers the temporary identifier with the SSPM network element, and the SSPM network element stores a correspondence between a first identifier of the terminal device and a second terminal identifier.

It may be understood that the terminal device needs to set up a session with the UPF network element in the first network by using the control plane network element in a subsequent procedure. Therefore, the access response message may carry the second terminal identifier of the terminal device, so that the AMF network element determines a corresponding terminal device based on the second terminal identifier when exchanging with the control plane network element.

S312: The AMF network element sends a first registration accept message to the terminal device, and correspondingly, the terminal device receives the first registration accept message from the AMF network element.

In this step, the first registration accept message indicates that the terminal device is allowed to access and register with the first network. After receiving the first registration accept message, the terminal device is equivalent to being registered with the first network, and may use a subnet service in the first network or access a subnet service in the first network after setting up a session. When the access response information carries related information about the network slice and/or the logical network that the terminal device is allowed to access, the AMF may send the related information about the network slice and/or the logical network to the terminal device.

In some implementations, the related information of the network slice and/or the logical network that the terminal device is allowed to access may be encapsulated in a transparent container and sent to the AMF network element by using access response information, and the AMF network element forwards the related information to the terminal device in the first registration accept message.

S313: The terminal device sends a first session request message to the AMF network element. Correspondingly, the AMF network element receives the first session request message from the terminal device.

After receiving the first registration accept message from the AMF network element, the terminal device triggers setup of a PDU session. In this step, the terminal device sends the first session request message to the AMF network element, where the first session request message is used to request to set up a session between the terminal device and the UPF network element in the first network.

In some implementations, when the first registration accept message includes the information related to the network slice and/or the logical network that allows the terminal device to access, correspondingly, the first session request message is used to request to set up a session between the terminal device in the first network and the network slice and/or the logical network, and the first session request message further includes an identifier of a requested network slice and/or the logical network, where the requested network slice and/or the logical network is one or more of the network slice and/or the logical network that allows the terminal device to access and that is included in the first registration accept message.

It may be understood that if the first registration accept message indicates only that the terminal device is allowed to access the first network, default session setup is triggered in step S313.

It should be noted that, when a plurality of sessions are allowed to be set up, the first session request message sent by the terminal device to the AMF network element further includes a corresponding session identifier, and the session requested to be set up by using the first session request message may be distinguished by using the session identifier from a session that is set up.

S314: The AMF network element selects an SMF network element.

In this step, the AMF network element selects, based on the identification information of the first network, an SMF network element that supports the first network. It should be noted that, when the terminal device accesses the subnet in the foregoing step, the AMF network element stores identification information of the corresponding subnet. Therefore, a context of the AMF network element stores the identification information of the first network, and the AMF network element may select the SMF network element based on the stored identification information of the first network.

In some implementations, when the access network device can directly exchange with the UPF network element in the first network and the SMF network element does not need to collect statistics on session usage information, the SMF network element is not required in the communication method in this embodiment. In other words, this step is optional.

Optionally, the SMF network element may alternatively be co-located with the AMF network element. When the SMF network element and the AMF network element are co-located, it is equivalent to that the AMF network element integrates a function of a session management network element. In this case, the AMF network element does not need to select the SMF network element either.

S315: The AMF network element requests the SMF network element to set up a session from the terminal device to the first network.

In this step, the AMF network element triggers, based on the first session request message, a second UPF network element to allocate uplink tunnel information and downlink tunnel information to the session from the terminal device to the first network. The second UPF network element is a UPF network element that supports connection to the first network, and there is an interface between the second UPF network element and the access network device.

When the AMF network element and the SMF network element are separately disposed, it can be learned from step S314 that a context of the AMF network element stores the identification information of the first network. Therefore, the identification information of the first network is carried when the AMF network element requests the SMF network element to set up the session. Similar to the selecting, by the access network device, the AMF network element in step S304, the SMF network element selects, based on the identification information of the first network, a UPF network element that supports connection to the first network, where the UPF network element is the second UPF network element.

After receiving a session setup request from the AMF network element, the SMF network element triggers the second UPF network element to allocate the uplink tunnel information and the downlink tunnel information. To be specific, the SMF network element requests the selected second UPF network element to allocate the uplink tunnel information and the downlink tunnel information, and sends, to the AMF network element based on the session setup response message, first uplink tunnel information and first downlink tunnel information that are allocated by the second UPF network element. The first uplink tunnel information is used by the access network to send uplink data of the session to the second UPF network element, and the first downlink tunnel information is used by a session anchor UPF network element (namely, a first UPF network element located in the first network) to send downlink data of the session to the second UPF network element.

It may be understood that when the AMF network element is co-located with the SMF network element or the SMF network element is not required, an operation performed by the SMF network element in this step may be implemented by the AMF network element. To be specific, the AMF network element selects the second UPF network element based on the identification information of the first network, and the AMF network element triggers the second UPF network element to allocate the uplink tunnel information and the downlink tunnel information, that is, the AMF network element requests the second UPF network element to allocate the corresponding uplink tunnel information and downlink tunnel information.

S316: The AMF network element sends a second session request message to the subnet control plane network element. Correspondingly, the subnet control plane network element receives the second session request message from the AMF network element.

The second session request message is used to request to set up a session between the terminal device and the UPF network element in the first network, and the second session request message includes the first downlink tunnel information allocated by the second UPF network element. When the first session request message includes an identifier of the network slice and/or the identifier of the logical network, correspondingly, the second session request message includes the identifier of the network slice and/or the identifier of the logical network, and the second session request message may further include current location information of the terminal device.

A network element responsible for session processing in the first network may be co-located with the control plane network element in the first network, or may be separately deployed. When receiving the session setup request message, the network element responsible for session processing in the first network needs to obtain session subscription information and/or session policy information of the terminal, to set up a session.

Because the session subscription information and/or the session policy information is stored in the SSPM network element, the network element responsible for session processing in the first network queries the SSPM network element based on the identification information of the terminal, to obtain the session subscription information and/or the session policy information of the terminal. A method for obtaining a terminal identifier is as follows.

In some implementations, the second session request message further includes the second terminal identifier allocated by the control plane network element to the terminal device in step S311. When the control plane network element in the first network is co-located with the session management network element in the first network, that is, the control plane network element in the first network integrates a function of the session management network element in the first network, the control plane network element in the first network supports control of the UPF in the first network. The control plane network element may determine, based on the second terminal identifier, the terminal device corresponding to the second session request message, and obtain the session subscription information and/or the session policy information.

It may be understood that, when the first session request message in step S313 includes the first identifier of the terminal device, the second session request message may also include the first identifier of the terminal device. The control plane network element may also determine, based on the first identifier of the terminal device, the terminal device corresponding to the second session request message, and obtain the session subscription information.

In some implementations, when the control plane network element in the first network and the session management network element in the first network are separately deployed, the control plane network element in the first network further needs to send a request message to the session management network element in the first network. The session management network element may determine a corresponding terminal device based on the first identifier included in the request message, and obtain the session subscription information and/or the session policy information. For privacy security, the second request message may not include the first identifier of the terminal device. In this case, the session management network element in the first network determines, based on the second terminal identifier of the terminal device, the terminal device corresponding to the session. Specifically, if the control plane network element in the first network registers the second terminal identifier with the SSPM network element, as shown in step S311, the session management network element in the first network may directly query the SSPM network element based on the second terminal identifier to obtain session subscription data and/or the session policy information of the terminal.

In the embodiment shown in FIG. 3A to FIG. 3D in this application, it is assumed that the control plane network element in the first network integrates a function of the session management network element in the first network.

S317: The subnet control plane network element obtains a session policy and/or the session policy information.

In this step, the control plane network element in the first network obtains the session subscription information and/or the session policy information from the SSPM network element based on the first identifier or the second terminal identifier included in the second request message. The session subscription information may include information such as a network slice that the terminal device in the first network is allowed to access, logical subnet information, and a location range in which the terminal device is allowed to access a network slice or a logical subnet. The session policy information may include quality of service (quality of service, QoS) information corresponding to the session, for example, information such as a maximum bandwidth allowed by the session and a scheduling priority.

It may be understood that, because the SSPM network element stores the correspondence between the first identifier of the terminal device and the second terminal identifier, the control plane network element can also obtain the foregoing information from the SSPM network element based on the second terminal identifier included in the second request message.

S318: The subnet control plane network element selects a subnet UPF network element.

The control plane network element in the first network or the session management network element in the first network can determine, based on the session subscription information obtained from the SSPM network element and the second session request message, whether to allow setup of the session between the terminal device and the UPF network element in the first network. After the session setup is allowed, the control plane network element in the first network or the session management network element in the first network may select an appropriate UPF network element from the UPF network elements in the first network based on the network slice, the logical subnet information, and the location information of the terminal device that are included in the second session request message.

For example, a UPF network element that supports the network slice and the logical subnet in the second session request message is selected, or a UPF network element close to a current location of the terminal device is selected. The UPF network element selected by the control plane network element or the session management network element in the first network is the first UPF network element in the first network.

S319: Set up a session on the subnet UPF network element.

In this step, the control plane network element in the first network or the session management network element in the first network sends a third session request message to the first UPF network element in the first network. The third session request message is used to request to set up a session in the first UPF network element for a session from the terminal device to the first network. The third session request message includes the first downlink tunnel information allocated by the second UPF network element, and the first UPF network element sends the downlink data to the second UPF network element based on the first downlink tunnel information. After receiving the third session request message, the first UPF network element in the first network allocates second uplink tunnel information to the session of the terminal device, to receive the uplink data from the second UPF network element.

In some implementations, the third session request message may further include a configuration rule of the UPF network element. For example, when the first network allows the terminal device to access only a specific network slice or logical subnet, the configuration rule of the UPF network element may be a filtering rule, and the UPF network element discards, according to the configuration rule, all data packets whose source/destination addresses are non-allowed logical networks or network slices.

It may be understood that if the session subscription information or the session policy of the terminal device in the first network includes a corresponding access rule, the UPF network element also needs to be configured according to the access rule. For example, if the session policy restricts the terminal device to access a specific website, for example, a non-working website, the UPF network element filters or discards, according to the configuration rule, a data packet whose source/destination address is a specific website.

S320: The subnet control plane network element sends a session setup response message to the AMF network element. Correspondingly, the AMF network element receives the session setup response message from the subnet control plane network element.

In this step, the session setup response message includes a non-access stratum (non-access stratum, NAS) message indicating, to the terminal device, that the session is successfully set up, and the session setup response message further includes the second uplink tunnel information allocated by the first UPF network element in the first network.

In some implementations, after the control plane network element in the first network determines a corresponding QoS parameter based on the session policy information, the session setup response message may further include the QoS parameter.

S321: The AMF network element requests the access network device to allocate a session resource.

In this step, the AMF network element sends, to the access network device, a message used to request to allocate a session resource. The message includes the NAS message indicating that the session is successfully set up, the QoS parameter information corresponding to the session, and the first uplink tunnel information allocated by the second UPF network element. The access network device may send the uplink data to the second UPF network element based on the first uplink tunnel information.

The access network device allocates a corresponding radio air interface resource to the session of the terminal device based on the QoS parameter, forwards, to the terminal device, the NAS message indicating that the session is successfully set up, and sends, to the AMF network element, a response message including the downlink tunnel information allocated by the access network device.

S322: The AMF network element updates the session.

After receiving the response message including the downlink tunnel information allocated by the access network device, the AMF network element sends a session update request message to the second UPF network element by using the SMF network element, where the session update request message includes the downlink tunnel information allocated by the access network device and the second uplink tunnel information. The second UPF network element may send the downlink data to the access network device by using the downlink tunnel information allocated by the access network device, and may send the uplink data to the first UPF network element in the first network by using the second uplink tunnel information.

In this step, an uplink/downlink path of the session between the terminal device and the first UPF network element in the first network may be set up through session update. In this case, the terminal device may access a related service in the first network.

In this embodiment, when selecting the subnet based on the subnet selection list and the broadcast subnet identification information, the terminal device does not need to consider the PLMN ID configured in the SIM card loaded on the terminal device and the PLMN ID broadcast by the access network device. Therefore, even if the terminal device and the access network device belong to different operators, the terminal device may still initiate, to the access network device, a request for accessing the subnet.

The terminal device requests, from the AMF network element by using the access network device, to access and register with the first network. The control plane network element in the first network obtains the subscription information between the terminal device and the first network, and determines, based on the subscription information, whether the terminal device is allowed to access the first network. The control plane network element in the subnet newly disposed in the architecture performs authorization and authentication on the terminal device, so that a control right for accessing the subnet may be transferred to the subnet tenant, and the home operator of the terminal device does not need to set up a PDU session with the subnet. In this way, terminal devices belonging to different operators can access a same subnet in a scenario, thereby providing convenience for a subnet user.

In the embodiment shown in FIG. 3A to FIG. 3D, in step S306, the AMF network element requests the home operator indicated by the terminal device to perform identity authentication on the terminal device. A prerequisite is that a roaming agreement exists between the operator OP 1 and the operator OP 2 in the network architecture 100. The interface 1 is used as a roaming interface, and the AMF network element deployed by the OP 1 may initiate an identity authentication request to the AUSF/UDM network element deployed by the OP 2 through the interface 1. When there is no roaming agreement between the operator OP 1 and the operator OP 2, there is no interface 1 in the network architecture 100. In this case, the subnet operator cooperates with the operator OP 1 and the operator OP 2. The interface 2 is used as a capability exposure interface of the operator OP 2, and may provide an interaction interface for identity authentication. The subnet control plane network element initiates an identity authentication request to the AUSF/UDM network element deployed by the OP 2 through the interface 2. The following describes a communication method when there is no roaming agreement between the operator OP 1 and the operator OP 2.

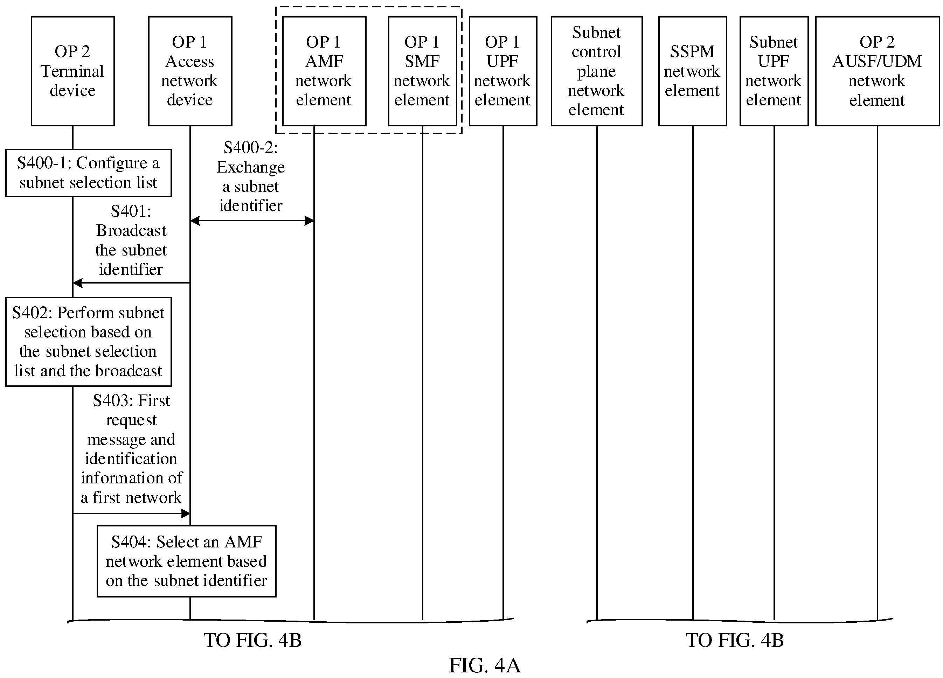

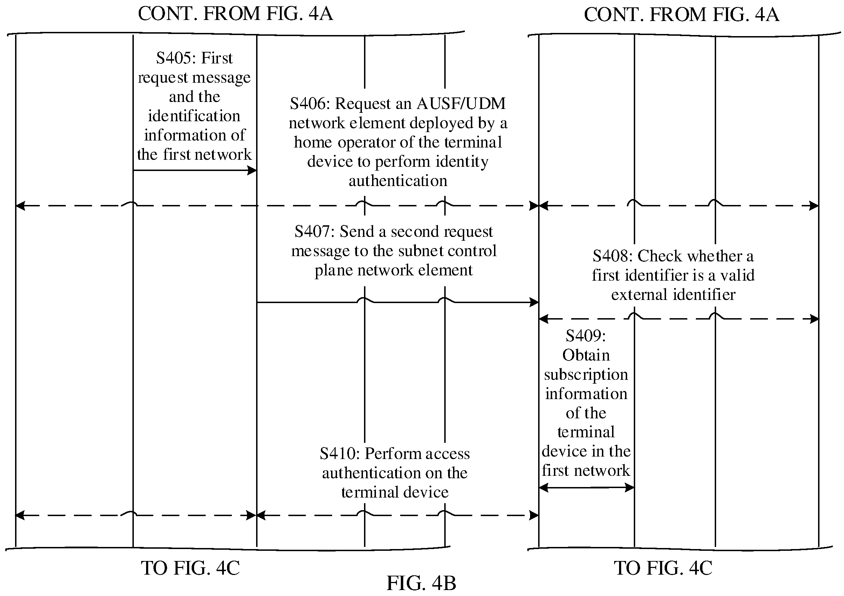

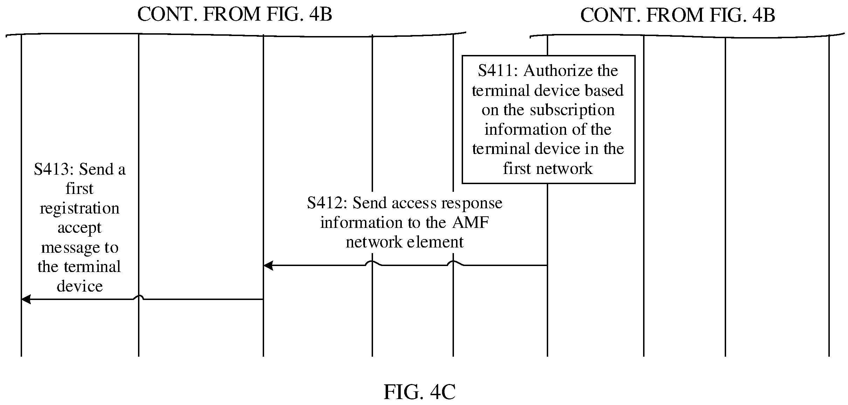

FIG. 4A to FIG. 4C are a schematic flowchart of a communication method according to an embodiment of this application. As shown in FIG. 4A to FIG. 4C, steps S400 to S405 are consistent with steps S300 to S305 in the foregoing embodiment. The communication method in this embodiment is different from that in the foregoing embodiment in the following steps.

S406: The subnet control plane network element requests the AUSF/UDM network element of the home operator of the terminal device to perform identity authentication.

In this step, because there is no roaming agreement between the operator OP 1 and the operator OP 2, the subnet control plane network element initiates, through the interface 2, an identity authentication request to the AUSF/UDM network element that is indicated by the terminal device and that is deployed by the home operator.

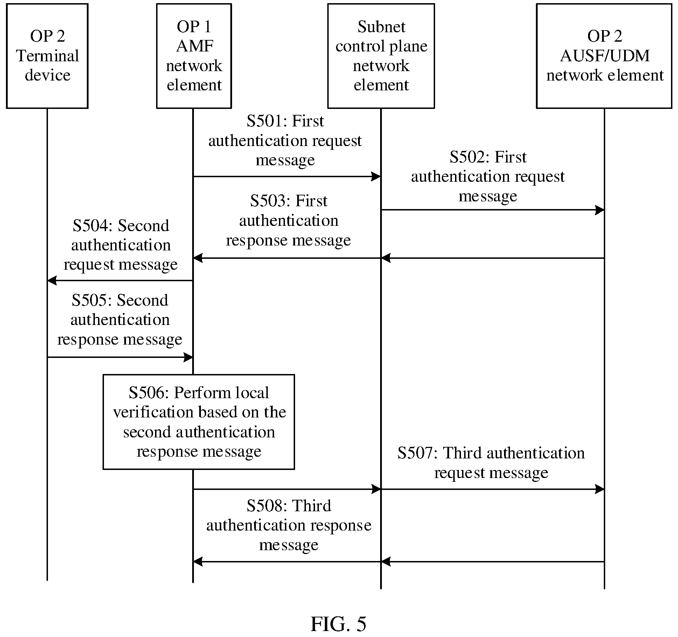

FIG. 5 is a schematic flowchart of requesting, by a subnet control plane network element, an AUSF/UDM network element to perform identity authentication according to an embodiment of this application. As shown in FIG. 5, an identity authentication procedure includes the following steps.

S501: An AMF network element sends a first authentication request message to the subnet control plane network element. Correspondingly, the subnet control plane network element receives the first authentication request message from the AMF network element.

In this identity authentication procedure, the first request message in step S405 already carries the SUPI/SUCI of the terminal device. Therefore, in this step, the first authentication request message sent by the AMF to the control plane network element in the first network includes the SUPI/SUCI of the terminal device.

S502: The subnet control plane network element sends the first authentication request message to the AUSF/UDM network element deployed by a home operator of the terminal device. Correspondingly, the AUSF/UDM network element receives the first authentication request message from the subnet control plane network element.

The AUSF/UDM network element determines, based on the SUPI/SUCI of the terminal device, that the home operator of the terminal device is the OP 2, and sends the first authentication request message to the AUSF/UDM network element deployed in the OP 2.

S403: The AUSF/UDM network element deployed by the home operator of the terminal device sends a first authentication response message to the AMF network element. Correspondingly, the AMF network element receives the first authentication response message from the AUSF/UDM network element.

In this step, the AUSF/UDM network element deployed on the OP 2 generates an authentication vector based on the SUPI/SUCI carried in the first authentication request message, and carries the authentication vector in the first authentication response message. The AUSF/UDM network element deployed on the OP 2 sends the first authentication response message to the control plane network element in the first network, and the control plane network element forwards the first authentication response message to the AMF network element.

S504: The AMF network element sends a second authentication request message to the terminal device. Correspondingly, the terminal device receives the second authentication request message from the AMF network element.

The AMF network element generates a second authentication request message of a non-access stratum NAS based on the authentication vector in the received first authentication response message, and sends the second authentication request message to the terminal device, where the second authentication request message carries the authentication vector.

In some implementations, the first authentication request message further includes the first terminal identifier allocated by the AMF network element to the terminal device in the embodiment shown in FIG. 3A to FIG. 3D. Correspondingly, the first authentication response message also includes the first terminal identifier. The AMF network element locates a context of the terminal device based on the first terminal identifier, to send the second authentication request message in this step to the terminal device determined based on the first terminal identifier.

S505: The terminal device sends a second authentication response message to the AMF network element. Correspondingly, the AMF network element receives the second authentication response message from the terminal device.

The terminal device calculates and generates a second authentication response message based on the second authentication request message sent by the AMF network element, where the second authentication response message includes authentication information calculated based on the authentication vector, and the terminal device sends the second authentication response message to the AMF network element. In an example, verification information may be a digital signature obtained by the terminal device by calculating a random number carried in the second authentication request message.

S506: The AMF network element performs local verification based on the second authentication response message.

In this step, the AMF network element needs to perform verification based on the verification information carried in the second authentication response message. When the verification succeeds, it indicates that the terminal device is a subscriber of the home operator OP 2 indicated by the terminal device, and identity authentication succeeds. It should be noted that, if the authentication vector in the first authentication response message does not include the verification information, the AMF network element cannot implement identity authentication, and subsequent steps shown in FIG. 5 need to be performed.

S507: The AMF network element sends a third authentication request message to the AUSF/UDM network element deployed by the home operator of the terminal device. Correspondingly, the AUSF/UDM network element receives the third authentication request message from the AMF network element.

When the AMF network element cannot perform local verification, the AMF network element sends the third authentication request message to the control plane network element in the first network, where the third authentication request message includes authentication information generated by the terminal device based on the authentication vector. The control plane network element forwards the third authentication request message to the AUSF/UDM network element deployed by the OP 2.

In some implementations, the third authentication request message further includes the second terminal identifier allocated by the control plane network element in the first network to the terminal device in the embodiment shown in FIG. 3A to FIG. 3D. The control plane network element may locate a context of the terminal device based on the second terminal identifier, and forward the third authentication request message to the AUSF/UDM network element deployed by the home operator OP 2 of the terminal device.

S508: The AUSF/UDM network element deployed by the home operator of the terminal device sends a third authentication response message to the AMF network element. Correspondingly, the AMF network element receives the third authentication response message from the AUSF/UDM network element.

In this step, the AUSF/UDM network element deployed in the OP 2 verifies the authentication information carried in the third authentication request message, generates, based on verification success, the third authentication response message, and sends the third authentication response message to the control plane network element in the first network. The control plane network element forwards the third authentication response message to the AMF network element. The third authentication response message may further carry key information used to perform security protection on subsequent communication, for example, a root key Kamf.

In some implementations, the control plane network element may further perform derivation based on the key information sent by the AUSF/UDM network element, and send a derived key to the AMF network element. In other words, the control plane network element does not merely perform forwarding.

In the identity authentication procedure shown in FIG. 5, the first request message in step S405 carries the SUPI/SUCI of the terminal device. If the first request message does not carry the SUPI/SUCI of the terminal device, the AMF network element needs to first obtain the SUPI/SUCI from the terminal device and then initiate the foregoing procedure.

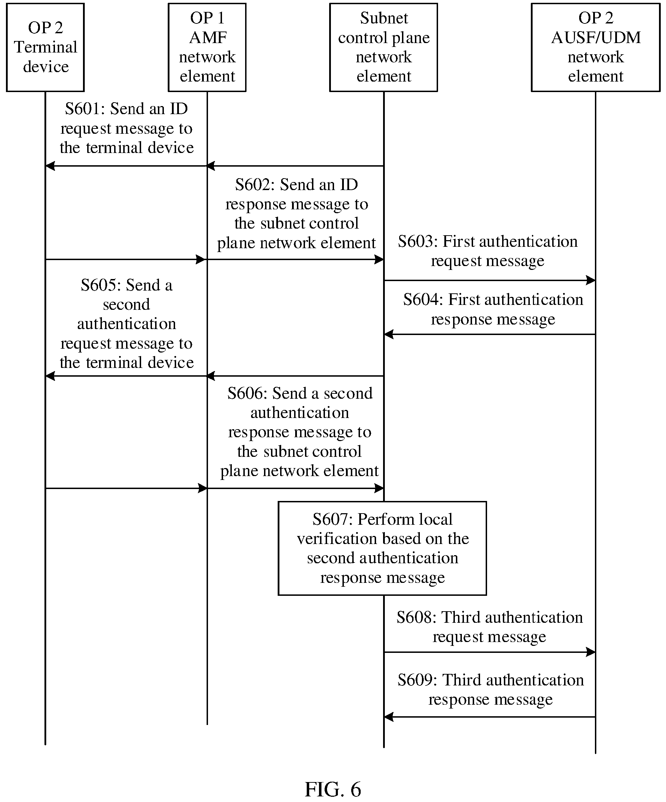

FIG. 6 is a schematic flowchart of requesting, by a subnet control plane network element, an AUSF/UDM network element to perform identity authentication according to another embodiment of this application. In the flowchart shown in FIG. 6, an AMF network element is responsible for forwarding an authentication-related NAS message between a terminal device and the subnet control plane network element. The method specifically includes the following steps.

S601: The subnet control plane network element sends an ID request message to the terminal device. Correspondingly, the terminal device receives the ID request message from the subnet control plane network element.

When the first request message does not carry an SUPI/SUCI of the terminal device, the control plane network element in the first network sends the ID request message to the AMF network element, and the AMF network element forwards the ID request message to the terminal device. The ID request message is used to request to obtain the SUPI/SUCI of the terminal device. The message may include a first terminal identifier, so that the AMF network element identifies the terminal device.

S602: The terminal device sends an ID response message to the subnet control plane network element. Correspondingly, the subnet control plane network element receives the ID response message from the terminal device.

The terminal device sends the ID response message to the AMF network element, and the AMF network element forwards the ID response message to the control plane network element in the first network. The ID response message includes the SUPI/SUCI of the terminal device. The message may include a second terminal identifier, so that the subnet control plane network element identifies the terminal device.

S603: The subnet control plane network element sends the first authentication request message to the AUSF/UDM network element deployed by a home operator of the terminal device. Correspondingly, the AUSF/UDM network element receives the first authentication request message from the subnet control plane network element.

The control plane network element can determine, based on the SUPI/SUCI of the terminal device, that the home operator of the terminal device is the OP 2, and sends the first authentication request message to the OP 2.

S604: The AUSF/UDM network element deployed by the home operator of the terminal device sends a first authentication response message to the subnet control plane network element. Correspondingly, the subnet control plane network element receives the first authentication response message from the AUSF/UDM network element.

The AUSF/UDM network element deployed in the OP 2 sends the first authentication response message to the control plane network element in a first network.

S605: The subnet control plane network element sends a second authentication request message to the terminal device. Correspondingly, the terminal device receives the second authentication request message from the subnet control plane network element.

The control plane network element in the first network generates a second NAS authentication request message based on the authentication vector in the received first authentication response message. The control plane network element sends the second authentication request message to the AMF network element, and forwards the second authentication request message to the terminal device by using the AMF network element. The second authentication request message carries the authentication vector.

In some implementations, the second authentication request message further includes the first terminal identifier allocated by the AMF network element to the terminal device in the embodiment shown in FIG. 3A to FIG. 3D. The AMF network element may locate a context of the terminal device based on the first terminal identifier, to forward the second authentication request message in this step to the terminal device determined based on the first terminal identifier.

S606: The terminal device sends a second authentication response message to the subnet control plane network element. Correspondingly, the subnet control plane network element receives the second authentication response message from the terminal device.

The terminal device generates a second authentication response message through calculation based on the second authentication request message sent by the control plane network element in the first network, where the second authentication response message includes verification information calculated based on the authentication vector. The terminal device sends the second authentication response message to the AMF network element, and the AMF network element forwards the second authentication response message to the control plane network element.

S607: The subnet control plane network element performs local verification based on the second authentication response message.

This step is consistent with step S506. The control plane network element in the first network needs to perform verification based on the verification information carried in the second authentication response message. When the verification succeeds, it indicates that the terminal device is a subscriber of the home operator OP 2 indicated by the terminal device, and identity authentication succeeds. If the authentication vector in the first authentication response message in step S604 does not include the verification information, the control plane network element cannot implement identity authentication, and needs to perform subsequent steps shown in FIG. 6.

S608: The subnet control plane network element sends the third authentication request message to the AUSF/UDM network element deployed by the home operator of the terminal device. Correspondingly, the AUSF/UDM network element receives the third authentication request message from the subnet control plane network element.

When the control plane network element in the first network cannot perform local verification, the control plane network element sends a third authentication request message to the AUSF/UDM network element deployed by the OP 2, where the third authentication request message includes the authentication information generated by the terminal device based on the authentication vector.

In some implementations, when the AMF network element forwards the second authentication response message to the control plane network element in step S606, the second authentication response message carries the second terminal identifier allocated by the control plane network element to the terminal device. The control plane network element may locate a context of the terminal device based on the second terminal identifier, and send the third authentication request message to the AUSF/UDM network element deployed by the home operator OP 2 of the terminal device determined based on the second terminal identifier.

S609: The AUSF/UDM network element deployed by the home operator of the terminal device sends a third authentication response message to the subnet control plane network element. Correspondingly, the subnet control plane network element receives the third authentication response message from the AUSF/UDM network element.

In this step, the AUSF/UDM network element deployed in the OP 2 verifies the authentication information carried in the third authentication request message, generates, based on verification success, the third authentication response message, and sends the third authentication response message to the control plane network element in the first network. The third authentication response message may further carry key information used to perform security protection on subsequent communication.

In the embodiment shown in FIG. 5, the AMF network element and the AUSF/UDM network element deployed in the OP 2 are entities that perform identity authentication. However, in the embodiment shown in FIG. 6, the control plane network element in the first network and the AUSF/UDM network element deployed in the OP 2 are entities that perform identity authentication.

Similar to the subnet access authentication procedure shown in FIG. 3A to FIG. 3D, after the terminal device is authenticated, and it is determined that the terminal device is a subscriber of the home operator OP 2 indicated by the terminal device, the subnet control plane network element may further determine, based on the subscription information between the terminal device and the subnet, whether the terminal device is allowed to access the subnet that the terminal device expects to access. As shown in FIG. 4A to FIG. 4C, the communication method in this embodiment further includes the following steps.

S407: The AMF network element sends a second request message to a subnet control plane network element. Correspondingly, the subnet control plane network element receives the second request message from the AMF network element.

In this step, the AMF network element sends a second request message to the control plane network element in the first network based on a subnet identifier, where the second request message is used to request access of the terminal device to the first network. In some implementations, the first request message in step S403 may further carry the subnet subscription identifier corresponding to the first network. Correspondingly, the second request message may also carry a subnet subscription identifier of the terminal device in a first subnet.

It should be noted that an execution sequence of step S406 and step S407 may be changed. If identity authentication is performed on the terminal device in the authentication procedure in step S406 by using the embodiment shown in FIG. 5, step S406 is performed before step S407. If identity authentication is performed on the terminal device in the embodiment shown in FIG. 6, step S407 is performed before step S406.

Optionally, when the subnet subscription identifier is an external identifier of the terminal device, the communication method in this embodiment may further include step S408.

S408: Check whether a first subnet subscription identifier is a valid external identifier.

In this step, whether the subnet subscription identifier is a valid external identifier may be verified in two manners. One manner is as follows.

The control plane network element in the first network requests, from the UDM network element deployed in the OP 2, to obtain the external identifier of the terminal device. If the external identifier of the terminal device includes the subnet subscription identifier carried in the second request message, the subnet subscription identifier is successfully verified, indicating that the subnet subscription identifier is a valid external identifier.

The second manner is as follows.

The control plane network element in the first network sends, to the UDM network element deployed by the OP 2, the subnet subscription identifier carried in the second request message, and requests the UDM network element to verify whether the subnet subscription identifier is a valid external identifier. The control plane network element indicates a verification result by using response information sent by the UDM network element.

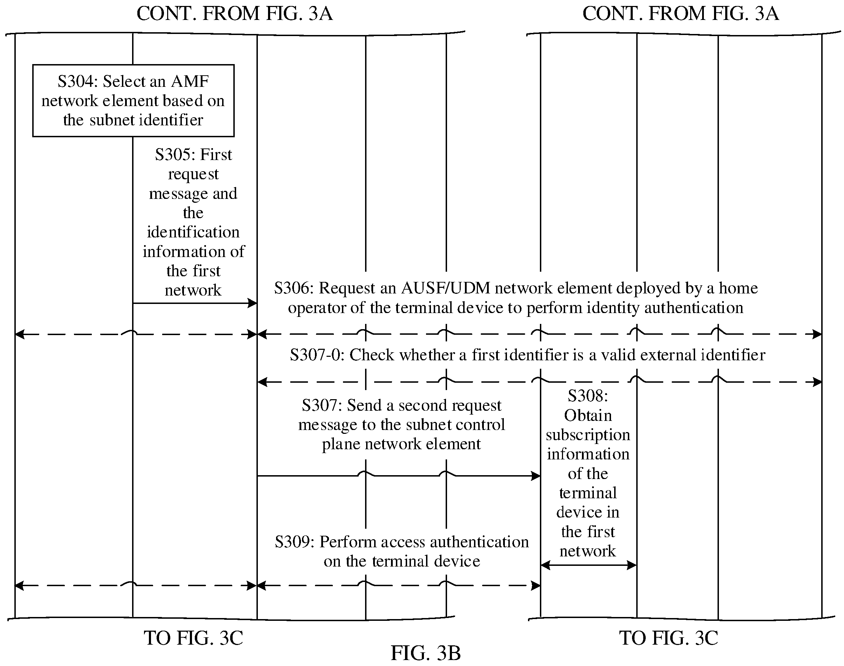

This is similar to step S307-0 in the embodiment shown in FIG. 3B. A main difference lies in that when there is no roaming agreement between the operator OP 1 and the operator OP 2, an execution body for checking whether the subnet subscription identifier is a valid external identifier in step S408 is the control plane network element in the first network and the AUSF/UDM network element deployed by the OP 2.

S409: The subnet control plane network element obtains subscription information of the terminal device in the first network.

S410: The subnet control plane network element performs access authentication on the terminal device.

S411: The subnet control plane network element performs authorization and authentication on the terminal device based on the subscription information of the terminal device in the first network.

S412: The subnet control plane network element sends access response information to the AMF network element. Correspondingly, the AMF network element receives the access response information from the subnet control plane network element.

Because steps S409 to S412 are performed by the subnet control plane network element, steps S409 to S412 are consistent with steps S308 to S311 in the embodiment shown in FIG. 3B and FIG. 3C.

When the terminal device is authenticated in the manner shown in FIG. 6 in step S406, the access response information may further carry a key Kamf. The AMF network element derives a NAS key and derives Kgnb based on Kamf, to protect a NAS message and an air interface message of the terminal device. The control plane network element may derive Kamf based on the key information received in step S609, or directly use the key information received in step S609 as Kamf.

S413: The AMF network element sends a first registration accept message to the terminal device. Correspondingly, the terminal device receives the first registration accept message from the AMF network element.

This step is consistent with step S313 in FIG. 3C. In some implementations, based on this, the AMF network element may further perform key derivation based on the key received in step S412 or the key received in step S408 (when the terminal device is authenticated in the manner in FIG. 5 in step S406), and perform operations such as starting a NAS security mode and sending an initial context of the terminal device to the access network device.

After receiving the first registration accept message from the AMF network element, the terminal device triggers set up of a PDU session. A procedure of setting up a session between the terminal device and the UPF network element in the first network in the embodiment shown in FIG. 4A to FIG. 4C is consistent with that in the embodiment shown in FIG. 3A to FIG. 3D. Details are not described herein again.

In this embodiment, the AMF network element initiates the identity authentication request to the AUSF/UDM network element deployed in the OP 2 by using the subnet control plane network element, without considering whether a roaming agreement exists between the operator that deploys the subnet and the home operator of the terminal device. This extends a use scenario of the communication method provided in this embodiment of this application.

In the communication method provided in this embodiment of this application, a subnet switch may be further added to the terminal device. When the subnet switch is turned on, the terminal device can select a subnet based on a configured subnet selection list, so that the terminal device accesses the subnet as required. The operator of the terminal device may turn on the subnet switch when the terminal device approaches a subnet site, to avoid unnecessary energy consumption caused by network search performed by the terminal device when the terminal device cannot access the subnet, and save energy for the terminal device.

It may be understood that, in addition to the subnet switch newly proposed in this embodiment of this application, an existing terminal device further has a macro network switch. For example, a "mobile data" switch on a mobile terminal is equivalent to the macro network switch. If the terminal device supports a dual-mode or multi-mode technology, that is, supports access to two or more networks through two or more access network devices, when the terminal device simultaneously turns on the subnet switch and the macro network switch, the terminal device may simultaneously access and register with the subnet and the macro network through the macro network access network device and the subnet access network device, to separately access a subnet service and a macro network service. In the conventional technology, only when the terminal device supports a dual-mode/multi-mode technology, the terminal device can access and register with the subnet and the macro network through different access network devices. The following describes how to access and register with the subnet and the macro network through a single access network device.

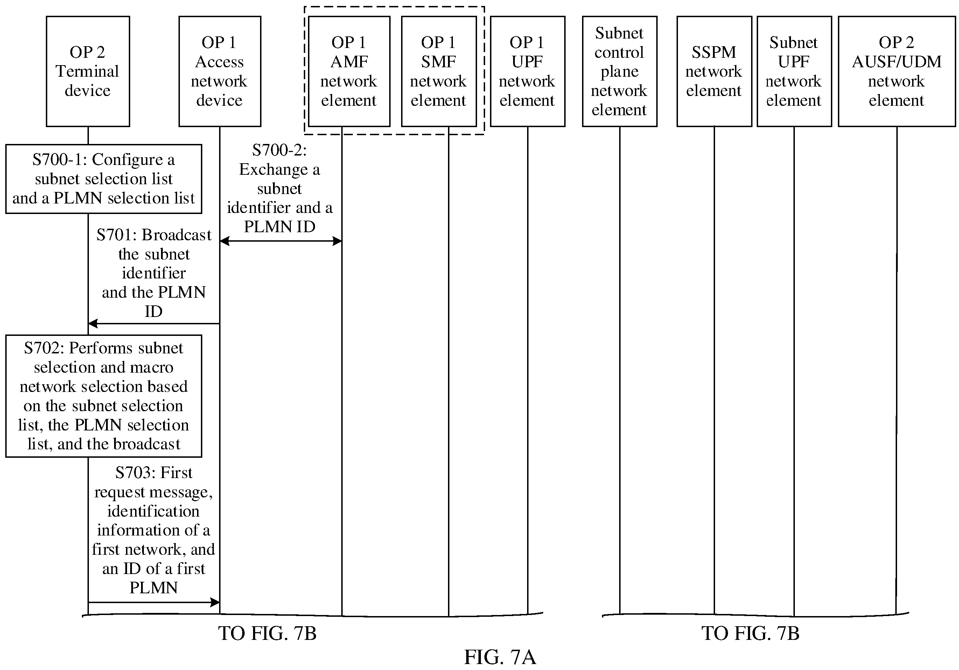

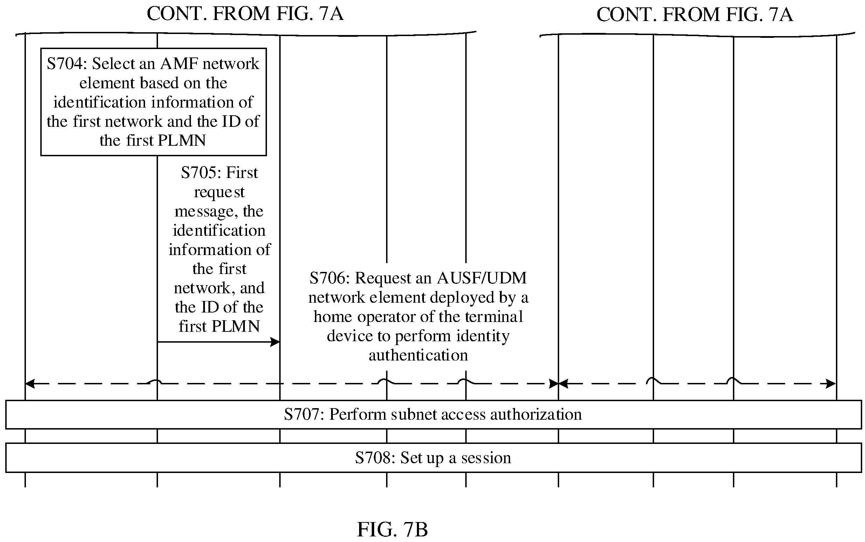

FIG. 7A and FIG. 7B are a schematic flowchart in which a terminal device simultaneously accesses and registers with a subnet and a macro network according to an embodiment of this application. As shown in FIG. 7A and FIG. 7B, because the terminal device needs to access and register with both the subnet and the macro network, considering that a procedure in which the terminal device accesses and registers with the subnet is described in detail in the foregoing embodiment, a procedure in which the terminal device accesses and registers with the macro network through a same access network device is based on the embodiment shown in FIG. 3A to FIG. 3D. Content related to subnet access is not described again. Specifically, the following steps are included.

S700-1: The terminal device configures a subnet selection list and a PLMN selection list.

The PLMN selection list includes at least one PLMN ID, and a corresponding macro network may be determined by using the PLMN ID. All corresponding macro networks corresponding to the PLMN IDs in the PLMN selection list are macro networks that can be selected by the terminal device, and the terminal device selects, based on the PLMN IDs in the PLMN selection list, the macro network that the terminal device expects to access.

S700-2: An access network device exchanges a subnet identifier and the PLMN ID with an AMF network element.

Both the access network device and the AMF network element support a plurality of different macro networks. During initial signaling exchange, the access network device and the AMF network element may exchange the PLMN IDs of the supported the macro network that are configured by the access network device and the AMF network element.

S701: The access network device broadcasts the subnet identifier and the PLMN ID. Correspondingly, the terminal device receives the subnet identifier and the PLMN ID from the access network device.

S702: The terminal device performs subnet selection and macro network selection based on the subnet selection list, the PLMN selection list, and the broadcast.

In this step, the terminal device matches a PLMN broadcast by the access network device with that in the configured PLMN selection list. If the PLMN selection list includes a PLMN ID that is the same as an PLMN ID broadcast by the access network device, it indicates that a macro network supported by the access network device matches a macro network that can be selected by the terminal device, and the terminal device can access, through the access network device, the macro network corresponding to the PLMN ID. Similarly, the PLMN selection list may also indicate a priority of a macro network, and the terminal device may select a macro network with a highest priority as a to-be-accessed macro network.

S703: The terminal device sends a first request message, identification information of a first network, and an ID of a first PLMN to the access network device, and the access network device receives the first request message, the identification information of the first network, and the ID of the first PLMN from the terminal device.

The first request message is further used to request access of the terminal device to the first PLMN, the first PLMN is the PLMN selected by the terminal device in step S702, and the terminal device sends the ID of the first PLMN to the access network device.

S704: The access network device selects an AMF network element based on the identification information of the first network and the ID of the first PLMN.

In this step, the AMF network element selected by the access network device needs to support both the first PLMN and a subnet corresponding to a subnet identifier of the first network.

S705: The access network device sends the first request message, the identification information of the first network, and the ID of the first PLMN to the AMF network element. Correspondingly, the AMF network element receives the first request message, the identification information of the first network, and the ID of the first PLMN from the access network device.

S706: The AMF network element requests an AUSF/UDM network element deployed by a home operator of the terminal device to perform identity authentication.

In this step, when requesting to access the first PLMN, the AMF network element only needs to request the AUSF/UDM network element deployed by the home operator indicated by the terminal device to perform identity authentication. After the identity authentication performed on the terminal device succeeds, the terminal device may access the first PLMN through a subnet access network device.

It should be noted that a prerequisite for the foregoing that the terminal device accesses the subnet and the macro network through the same access network device is that there is a roaming agreement between a macro network operator OP 1 that deploys the subnet and a home operator OP 2 of the terminal device, so that the terminal device can access the macro network through a macro network deployed by the OP 1 (a mode of accessing the macro network may be a home routing mode or a local breakout mode). Otherwise, even if identity authentication of the terminal device succeeds, the terminal device can only continue to access the subnet through a subnet control plane, but cannot access the macro network.

In the manner indicated in step S706, the OP 1 needs to share the AMF network element with the subnet. In a scenario in which the OP 1 and the subnet do not support sharing of the AMF network element, if both a service of the subnet and a service of the macro network need to be accessed, the following steps need to be further performed.

S707: Perform subnet access authorization.

A part related to subnet access in this step is consistent with that in steps S307-0 to S312 in the embodiment shown in FIG. 3B and FIG. 3C. A difference lies in that the first network further provides a capability of accessing a first PLMN service for the terminal device. Therefore, subscription information of the terminal device in the first network further includes service information that allows the terminal device to access the first PLMN service through the first network.

In this implementation, the PLMN ID in steps S700-1, S700-2, and S701 may be omitted, and the first request information in step S703 is further used to request to access a first service of the first PLMN through the first network. A control plane network element in the first network may determine, based on the subscription information of the terminal device in the first network, whether the terminal device is allowed to access the first PLMN through the first network and service information that allows the terminal device to access the first PLMN service through the first network (for example, allows the terminal device to access an IP multimedia subsystem (internet protocol multimedia subsystem, IMS) service of the first PLMN).

Correspondingly, the access response information sent by the subnet control plane network element to the AMF network element may further carry information indicating that the terminal device is allowed to access the first service of the first PLMN through the first network, and the AMF network element sends, to the terminal device, the information indicating that the terminal device is allowed to access the first service of the first PLMN through the first network.

In some implementations, the information indicating that the terminal device is allowed to access the first service of the first PLMN through the first network may be further encapsulated in a transparent container, and is sent to the AMF network element by using the access response information. The AMF network element forwards the information to the terminal device in the first registration accept message.

For example, the subscription information of the terminal device in the first network may indicate that the terminal device is allowed to access an IMS service or an internet service of the first PLMN. Correspondingly, the first registration accept message may indicate the IMS service that is of the first PLMN and that the terminal device is allowed to access.

It should be noted that, that the terminal device is allowed to access the first PLMN through the first network means that the first network communicates with the first PLMN as a subnet, and the first PLMN opens a macro network service to the first network. When only a subnet switch is turned on and a macro network switch is turned off, the terminal device may use, by accessing the first network, the macro network service provided by the first PLMN.

S708: Set up a session.

A part related to subnet access in this step is consistent with steps S313 to S322 in the embodiment shown in FIG. 2. To access a service of the PLMN through the first network, there is the following difference.

When the terminal device receives, in step S707, the information indicating that the terminal device is allowed to access the first service in the first PLMN through the first network, the first session request message further includes information indicating the first service. In an example, the first registration accept message indicates service information of a PLMN that the terminal device is allowed to access. For example, the first registration accept message indicates that the terminal device is allowed to access an IMS service of the PLMN. Correspondingly, the first session request message includes data network name (data network name, DNN) information and a PLMN identifier that correspond to the IMS service. The PLMN identifier may be included in the DNN information, and the control plane network element in the first network can determine, based on the DNN information, a service type of a PLMN to be accessed by the terminal device.

When the terminal device accesses a service of the PLMN through the first network, in an example, a session anchor may be a first UPF network element in the first network. When configuring the first UPF network element, the control plane network element in the first network needs to configure a corresponding rule to enable the first UPF network element to allow the terminal device to communicate with a specified PLMN. For example, the configuration rule allows the terminal device to communicate with an IMS network in the first PLMN.

In some implementations, the session anchor may alternatively be a specified PLMN. The control plane network element in the first network needs to select an SMF network element in the first PLMN, and requests the SMF network element to set up a session between the terminal device and a UPF network element in the first PLMN. In other words, when the session anchor is the first PLMN, the control plane network element in the first network further needs to set up a session between the first UPF network element in the first network and the UPF network element in the first PLMN.

For example, after the session of the terminal device is set up, the control plane network element in the first network sends a macro network session setup request message to the SMF network element in the first PLMN. The message includes the DNN information corresponding to the IMS service and second downlink tunnel information allocated by the first UPF network element. The SMF in the first PLMN selects, from the UPF network element in the first PLMN based on the DNN information corresponding to the IMS service, a UPF network element that supports the service, and requests the UPF network element in the first PLMN to allocate corresponding tunnel information. The UPF network element in the first PLMN transmits downlink data to the first UPF network element based on the second downlink tunnel information.

In this embodiment, the terminal device may access the subnet and the macro network through a same access network device when both the subnet switch and the macro network switch are turned on, or may use the macro network service through the accessed subnet only when the subnet switch is turned on. For a terminal device that does not support dual-mode/multi-mode, this can improve user experience and meet an access requirement.

In the embodiment shown in FIG. 7A and FIG. 7B, the terminal device needs to share the AMF network element when simultaneously registering with the macro network and the subnet. If the shared AMF network element is upgraded during network access, both subnet access and macro network access are affected. For this technical problem, an embodiment of this application provides a communication method, to separate subnet registration access from macro network registration access, so as to implement decoupling control on a registration access procedure.

To implement separate registration and access to the PLMN and the subnet, this embodiment of this application provides two different mobility management network elements: an AMF 1 and an AMF 2. The terminal device accesses the subnet through the AMF 1, and accesses the PLMN through the AMF 2. In other words, the AMF 1 corresponds to a core network of the subnet, and the AMF 2 corresponds to a core network of the PLMN. In some implementations, the AMF 1 and the AMF 2 may be a same mobility management network element. When the AMF 1 and the AMF 2 are a same AMF network element, the AMF network element stores two contexts of the terminal device, and different contexts are respectively used to correspondingly access the subnet and access the PLMN. In other words, when the AMF 1 and the AMF 2 are integrated into a same AMF network element, the terminal device is also separately registered with the macro network and the subnet.

It may be understood that the AMF network element herein is a name of a mobility management network element in a 5G communication system, and there may be another naming manner for the mobility management network element in the future. The AMF network element mentioned in this embodiment is merely an example for description.

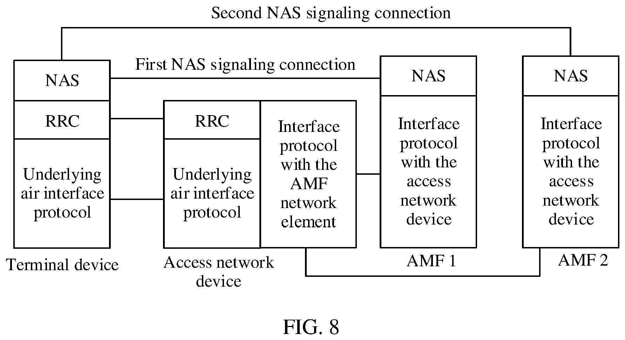

Because the terminal device may not be connected to two access network devices at the same time, the terminal device can set up only one radio resource control (radio resource control, RRC) layer connection to one access network device. The terminal device is connected to AMF network elements in two core networks through RRC. FIG. 8 is a diagram of a protocol stack of a terminal device according to an embodiment of this application. As shown in FIG. 8, a first NAS signaling connection is a signaling connection between the terminal device and an AMF 1, and a second NAS signaling connection is a signaling connection between the terminal device and an AMF 2.

When the terminal device needs to send a service request, a NAS stratum of the terminal device generates a corresponding NAS message. The NAS message is first sent to the RRC of the terminal device, and is sent to the access network device according to an RRC protocol. Then, the access network device sends the NAS message to the AMF network element by using an interface protocol between the access network device and the AMF network element. The access network device may determine, based on routing information associated with the NAS message, that the NAS message is associated with the AMF 1 or the AMF 2, and send the NAS message to a mobility management network element associated with the NAS message. The following specifically explains, with reference to FIG. 8, how to implement decoupling control on a registration access procedure.

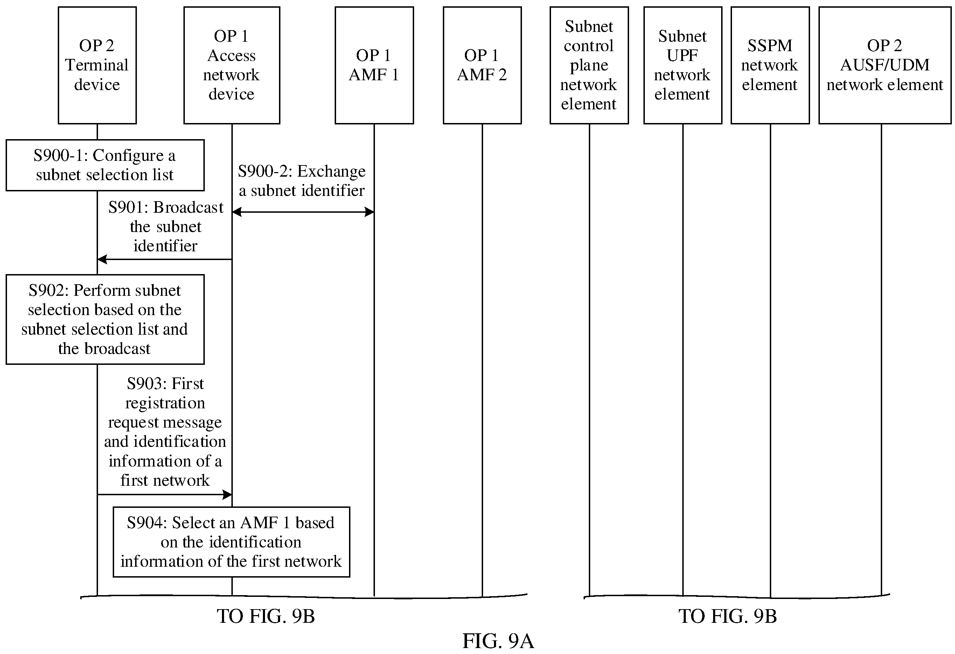

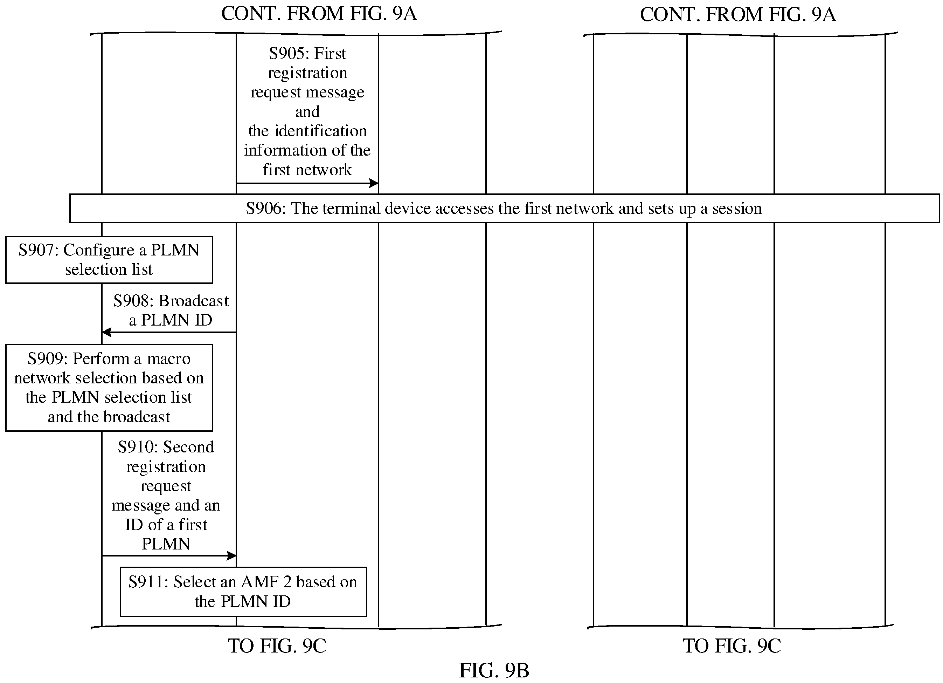

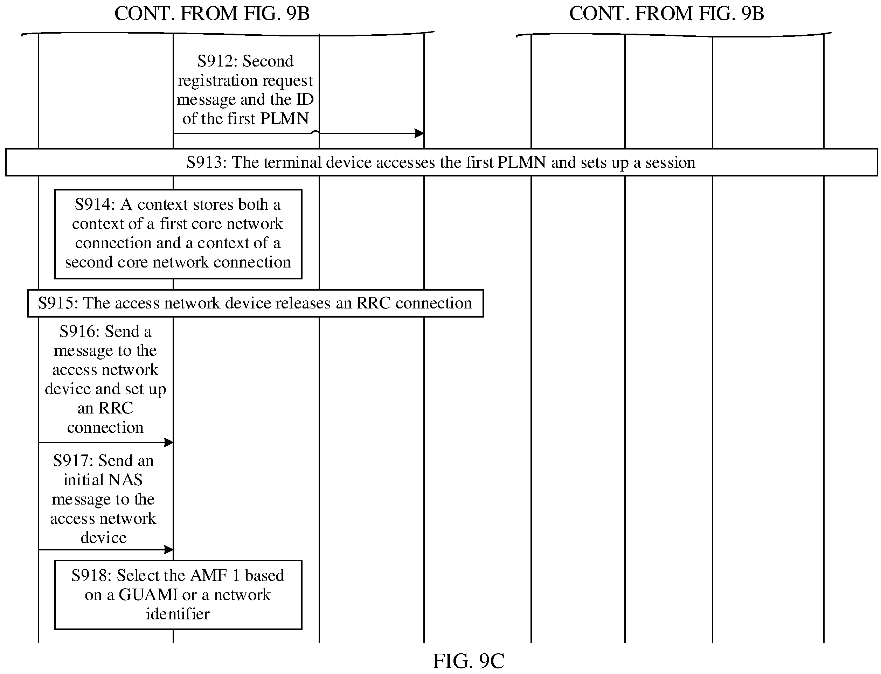

FIG. 9A to FIG. 9C are a schematic flowchart in which a terminal device separately accesses a subnet and a macro network according to an embodiment of this application. As shown in FIG. 9A to FIG. 9C, similar to the embodiment shown in FIG. 7A and FIG. 7B, a procedure in which the terminal device implements decoupled registration and access is based on the embodiment shown in FIG. 3A to FIG. 3D. Content related to subnet access is not described again. The procedure specifically includes the following steps.

S900-1: The terminal device configures a subnet selection list.

S900-2: An access network device exchanges a subnet identifier with an AMF 1.

S901: The access network device broadcasts the subnet identifier. Correspondingly, the terminal device receives the subnet identifier from the access network device.

S902: The terminal device performs subnet selection based on the subnet selection list and the broadcast.

S903: The terminal device sends a first registration request message and identification information of a first network to the access network device. Correspondingly, the access network device receives the first registration request message and the identification information of the first network from the terminal device.

S904: The access network device selects the AMF 1 based on the identification information of the first network.

S905: The access network device sends the first registration request message and the identification information of the first network to the AMF 1. Correspondingly, the AMF 1 receives the first registration request message and the identification information of the first network from the access network device.

S906: The terminal device accesses the first network and sets up a session.

Steps S900 to S905 are basically consistent with steps S300 to S305 in the embodiment shown in FIG. 3A and FIG. 3B. Step S906 corresponds to steps S306 to S322 in the embodiment shown in FIG. 3B to FIG. 3D. The terminal device is connected to the subnet indicated by the subnet identifier of the first network, and a session between the terminal device and the first UPF network element in the first network is set up. A specific procedure is not described herein again. A difference between the foregoing steps and the steps in the embodiment shown in FIG. 3A to FIG. 3D lies in that, in step S903, after receiving the first registration request message, the access network device determines that the message is the first message sent to the AMF 1.

It can be learned from FIG. 8 that, when the terminal device needs to access the first network, the terminal device sets up a first NAS signaling connection to the AMF 1 serving the first network, and the first NAS signaling connection is a first connection. The first NAS signaling connection is used to forward a message between the terminal device and the AMF 1.

The first NAS signaling connection includes a connection (namely, an RRC connection) between the terminal device and the access network device and a connection between the access network device and the AMF 1. On the connection between the terminal device and the access network device, the first NAS signaling connection is associated with first routing information, and the first routing information is a first connection identifier. After the first NAS signaling connection is set up, the terminal device carries the first routing information when sending a subsequent uplink NAS message through the first NAS signaling connection, so that the access network device determines, based on the first routing information, the AMF 1 corresponding to the first NAS signaling connection. When a downlink NAS message from the AMF 1 is received, the access network device also carries the first routing information when sending the downlink NAS message to the terminal device, so that the terminal device identifies the NAS signaling connection corresponding to the NAS message.

When the terminal device registers with the first network for the first time (that is, the terminal device has not registered with the first network before), or when the terminal device is in an idle state of a connection to the first network (that is, the terminal device has registered with the first network but the first NAS signaling connection between the terminal device and the first network has been released) and the terminal device needs to send a NAS message to the first network, the terminal device initiates setup of the first NAS signaling connection.

In some implementations, the first routing information is allocated by the terminal device. Correspondingly, when sending the first registration request message to the access network device in step S903, the terminal device further synchronously sends the first routing information used to associate the first NAS signaling connection. It may be understood that, if the terminal device sends the first routing information to the access network device, the access network device does not need to allocate the first routing information after receiving an initial NAS message (namely, the first registration request message).

In some other implementations, the access network device allocates the first routing information to the first NAS signaling connection, and sends the first routing information to the terminal device. Correspondingly, when the first registration request message is sent to the access network device in step S903, because the first routing information corresponding to the first NAS signaling connection has not been allocated, the terminal device does not send the first routing information associated with the first NAS signaling connection. After receiving the first registration request message, the access network device determines that the first NAS signaling connection needs to be set up, and allocates the first routing information.

Optionally, in step S903, when triggering setup of the first NAS signaling connection, the terminal device may further synchronously send indication information, to indicate to set up the first NAS signaling connection between the terminal device and the first network. The access network device may determine, based on the indication information, that the first NAS signaling connection needs to be set up.

Alternatively, the terminal device does not send the indication information, and the access network device may determine, based on message content sent in step S903, whether the first NAS signaling connection needs to be set up. In an example, the access network device may determine, based on the message sent in step S903 that does not carry routing identity information, that the first NAS signaling connection needs to be set up, or determine, based on first routing identity information in the message in step S903, that the first NAS signaling connection needs to be set up, that is, when the access network device determines that there is no NAS signaling connection associated with the routing identity information in the message in step S903, the access network device determines that the first NAS signaling connection needs to be set up.

It may be understood that after receiving the initial NAS message in S903, if the access network device determines that the first NAS signaling connection needs to be set up, the access network device sends the first routing information to the terminal device. The access network device may send a dedicated RRC message to the terminal device after receiving the initial NAS message in S903, where the RRC message carries the first routing message. Alternatively, the access network device may carry the first routing information in a subsequent exchange process with the terminal device in the procedure triggered by the initial NAS message in step S903, to transfer the first routing information to the terminal device. For example, the first routing information may be carried in a downlink RRC message of the first NAS message sent by the AMF 1 to the terminal device, or may be carried in a first downlink RRC message sent by the AMF 1 to the access network device after an initial context of the terminal device is sent.

It should be noted that the access network device needs to store the first routing information in a context of the terminal device, and store information about the corresponding AMF 1 in the context.

According to the foregoing steps, the terminal device has accessed the corresponding subnet. The following describes how the terminal device accesses the corresponding PLMN.

S907: The terminal device configures a PLMN selection list.

S908: The access network device broadcasts a PLMN ID. Correspondingly, the terminal device receives the PLMN ID from the access network device.

S909: The terminal device selects a PLMN based on the PLMN selection list and the broadcast.

Step S907 to step S909 are similar to step S700 to step S702 in the embodiment shown in FIG. 7A and FIG. 7B. In this embodiment, to implement a decoupling operation between subnet access and macro network access, a related execution operation of the macro network access is separated from a subnet access procedure, and the PLMN is independently selected.

S910: The terminal device sends a second registration request message and an ID of a first PLMN to the access network device. Correspondingly, the access network device receives the second registration request message and the ID of the first PLMN from the terminal device.

The second registration request message is used to request access of the terminal device to the first PLMN, the first PLMN is the PLMN selected by the terminal device in step S909, and the terminal device sends the ID of the first PLMN to the access network device.

It should be noted that the terminal device has accessed and registered with the subnet in steps S900 to S906, and an RRC connection of the terminal device, that is, a signaling connection between the terminal device and the access network device, may be in a connected state. In this case, if the terminal device sends the second registration request message to the access network device, the RRC message needs to be enhanced, so that an RRC message can also carry the second registration request message of the NAS stratum and ID information of the first PLMN in the connected state.

Because there is the first NAS message between the terminal device and the first PLMN in this step, namely, an initial NAS message, the terminal device needs to set up a second NAS connection to an AMF 2 serving the first PLMN, and the second NAS signaling connection is a second connection. The second NAS signaling connection is used to forward a message between the terminal device and the AMF 2.

The second NAS signaling connection includes a connection (namely, an RRC connection) between the terminal device and the access network device and a connection between the access network device and the AMF 2. On the connection between the terminal device and the access network device, the second NAS signaling connection is associated with second routing information, and the second routing information is a second connection identifier. After the second NAS signaling connection is set up, the terminal device carries the second routing information when sending a subsequent uplink NAS message through the second NAS signaling connection, so that the access network device determines, based on the second routing information, the AMF 2 corresponding to the second NAS signaling connection. When a downlink NAS message from the AMF 2 is received, the access network device also carries the second routing information when sending the downlink NAS message to the terminal device, so that the terminal device identifies the NAS signaling connection corresponding to the NAS message.

When the terminal device registers with the first PLMN for the first time (that is, the terminal device has not registered with the first PLMN before), or when the terminal device is in an idle state of a connection to the first PLMN (that is, the terminal device has registered with the first PLMN but the second NAS signaling connection between the terminal device and the first PLMN has been released) and the terminal device needs to send a NAS message to the first PLMN, the terminal device initiates setup of the second NAS signaling connection.

In some implementations, the second routing information is allocated by the terminal device. Correspondingly, when sending the second registration request message to the access network device in step S910, the terminal device further synchronously sends the second routing information used to associate the second NAS signaling connection. It may be understood that, if the terminal device sends the second routing information to the access network device, the access network device does not need to allocate the second routing information after receiving an initial NAS message (namely, the second registration request message).

In some other implementations, the access network device allocates the second routing information to the first NAS signaling connection, and sends the second routing information to the terminal device. Correspondingly, when the second registration request message is sent to the access network device in step S903, because the second routing information corresponding to the second NAS signaling connection has not been allocated, the terminal device does not send the second routing information associated with the second NAS signaling connection. After receiving the second registration request message, the access network device determines that the second NAS signaling connection needs to be set up, and allocates the second routing information.

Similar to step S903, in step S910, when triggering setup of the second NAS signaling connection, the terminal device may further synchronously send indication information, to indicate to set up the second NAS signaling connection between the terminal device and the first PLMN. The access network device may determine, based on the indication information, that the second NAS signaling connection needs to be set up.

Alternatively, the terminal device does not send the indication information, and the access network device may determine, based on the message sent in step S910, whether the second NAS signaling connection needs to be set up. In an example, the access network device may determine, by determining that the NAS message is an initial NAS message because the routing identifier information is not carried in step S910, that the second NAS signaling connection needs to be set up; or when the access network device determines, based on the second routing identifier information in the message in step S910, that there is no NAS signaling connection associated with the routing identifier information, that the second NAS signaling connection needs to be set up.

It may be understood that after receiving the initial NAS message in S910, if the access network device determines that the second NAS signaling connection needs to be set up, the access network device sends the second routing information to the terminal device. After receiving the initial NAS message in S910, the access network device may send a dedicated RRC message to the terminal device, where the RRC message carries the second routing message. Alternatively, the access network device may send the second routing information to the terminal device in a subsequent exchange process with the terminal device in the procedure triggered by the initial NAS message in step S910. For example, the second routing information may be carried in a downlink RRC message of the first NAS message sent by the AMF 2 to the terminal device or may be carried in the first downlink RRC message sent by the AMF 2 to the access network device after an initial context of the terminal device is sent.

The access network device further needs to store the second routing information in a context of the terminal device, and further stores information about the corresponding AMF 2 in the context.

S911: The access network device selects the AMF 2 based on the PLMN ID.

In this step, when there is already a signaling connection to the AMF 1, the access network device selects a new mobility management network element for the terminal device based on the PLMN ID, and the AMF 2 is a mobility management network element of the first PLMN indicated by the serving PLMN ID.

S912: The access network device sends the second registration request message and the ID of the first PLMN to the AMF 2. Correspondingly, the AMF 2 receives the second registration request message and the ID of the first PLMN from the access network device.

S913: The terminal device accesses the first PLMN and sets up a session.

In this step, the terminal device is connected to the first PLMN, and a session between the terminal device and a UPF network element in the first PLMN is set up. A specific procedure for connecting the terminal device to the macro network is not described herein again.

S914: A context of the access network device stores both a context of a first core network connection and a context of a second core network connection.

In this step, there is one RRC context in the access network device, and the RRC context is associated with contexts of core network connections corresponding to different AMF network elements. Each context of the core network connection includes:
routing identification information corresponding to a NAS signaling connection corresponding to the core network connection;
information about an interface protocol between the access network device and the AMF network element, where for example, in 5G, the information about the interface protocol may include identifiers respectively allocated by the access network device and the AMF network element to the terminal device, for example, an identifier (RAN UE NGAP ID) and an AMF UE NGAP ID that are allocated by the radio access network (radio access network, RAN) to the terminal device in a next generation application protocol (next generation application protocol, NGAP), and N2 link information associated with the signaling connection, and the N2 link information, for example, IP addresses of the AMF network element and the access network device; and
session context information of the core network connection, where the session context information may include any one of a QoS parameter, a tunnel identifier, a session identifier, and the like corresponding to the session.

S915: The access network device releases an RRC connection.

When the access network device detects that there is no data to be sent on core network connections corresponding to the AMF 1 and the AMF 2 of the terminal device, the access network device may release the RRC connection to the terminal device, so that the terminal device enters an idle state. It should be noted that, the no data herein refers to that there is no signaling message (for example, NAS signaling) and no user plane data. In some implementations, the access network device may further release all context information about the terminal device and signaling links that are created between the access network device and the AMF 1 and the AMF 2 for the terminal device. If a session is created, the access network device further releases a tunnel between the access network device and a core network user plane network element of the session.

When there is no data to be sent, the terminal device initiates entering an idle state, so that an air interface can be released, and energy of the terminal device can be saved.

After the terminal device enters the idle state in step S915, when the terminal device needs to use a subnet service again, the following steps need to be performed.

S916: The terminal device sends a message to the access network device and sets up an RRC connection.

In the idle state, the terminal device needs to first send the message to the access network device, to set up the RRC connection to the access network device, so that the terminal device enters an RRC connected state from the idle state.

S917: The terminal device sends an initial NAS message to the access network device. Correspondingly, the access network device receives the initial NAS message from the terminal device.

In this step, the initial NAS message (for example, a subnet service request message) sent by the terminal device to the access network device is used to activate a subnet connection. In this case, the terminal device may further send information about the AMF 1 or a first identifier (a subnet identifier) to the access network device. For example, in 5G, an identifier of the AMF network element is a globally unique AMF identifier (globally unique AMF identifier, GUAMI), and a mobility management network element corresponding to the GUAMI is the AMF 1.

It should be noted that, when the terminal device enters an idle state, it is equivalent to that the first NAS signaling connection is released in step S915, and the first NAS signaling connection is set up again in this step. For a specific setup process, refer to the foregoing steps. Details are not described herein again.

S918: The access network device selects the AMF 1 based on the GUAMI or a network identifier (for example, the first identifier).

The mobility management network element corresponding to the GUAMI is the AMF 1. Therefore, the access network device may select the AMF 1 based on the GUAMI carried in the subnet service request message. After determining that the mobility management network element is the AMF 1, the access network device may activate an original connection to the AMF 1. An activation process is not described herein again.

It should be noted that, in steps S917 and S918, the terminal device activates the subnet connection. Similarly, when the terminal device needs to activate a connection to the PLMN, the terminal device may send a macro network service request message to the access network device, and send a GUAMI of the AMF 2, so that the access network device selects the AMF 2 from the mobility management network element. A specific process is similar to that in steps S917 and S918, and details are not described herein again.

In this embodiment, the terminal device may separate subnet registration access from macro network registration access, to implement decoupling control on a registration access procedure, avoid sharing a mobility management network element, and enhance isolation between subnet registration access and macro network registration access.

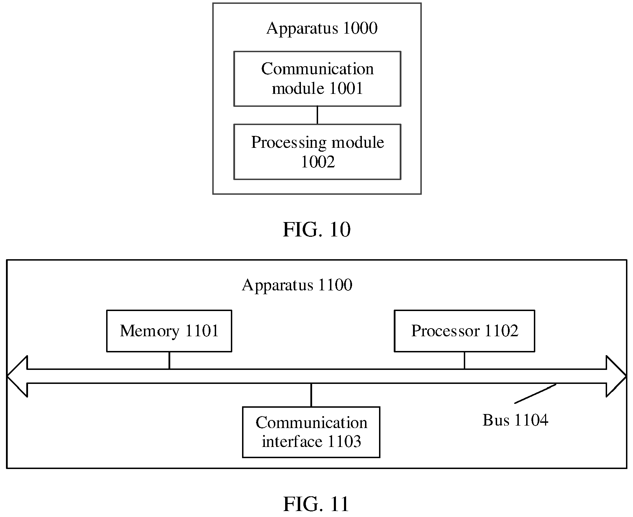

FIG. 10 is a diagram of a structure of a communication apparatus according to an embodiment of this application. As shown in FIG. 10, an apparatus 1000 in this embodiment may include a communication module 1001 and a processing module 1002. It should be understood that the apparatus 1000 is embodied in a form of a functional module. The term "module" herein may refer to a software module, an application-specific integrated circuit, an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 has a function of implementing the procedures and/or steps implemented by the terminal device, the access network device, and each part of network elements in any one of the foregoing method embodiments. The foregoing function may be implemented by using software, or may be implemented by hardware by executing corresponding software. The hardware or the software includes one or more modules corresponding to the functions.

FIG. 11 is a diagram of a structure of a communication apparatus according to another embodiment of this application. An apparatus 1100 shown in FIG. 11 may be configured to perform the method performed by the communication apparatus in any one of the foregoing methods.

As shown in FIG. 11, the apparatus 1100 in this embodiment includes a memory 1101, a processor 1102, a communication interface 1103, and a bus 1104. The memory 1101, the processor 1102, and the communication interface 1103 are communicatively connected to each other through the bus 1104.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 is configured to perform any one of the foregoing methods.

The processor 1102 may be a general-purpose central processing unit (central processing unit, CPU), a microprocessor, an application-specific integrated circuit, or one or more integrated circuits, and is configured to execute a related program.

The processor 1102 may alternatively be an integrated circuit chip and has a signal processing capability. In an implementation process, the related steps in embodiments of this application may be completed by using an integrated logic circuit of hardware in the processor 1102, or instructions in a form of software.

The processor 1102 may alternatively be a general-purpose processor, a digital signal processor (digital signal processing, DSP), an application specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 1101. The processor 1102 reads information in the memory 1101, and completes, in combination with the hardware of the processor 1102, functions that need to be performed by units included in the apparatus in this application.

The communication interface 1103 may use, but not limited to, a transceiver apparatus of a transceiver type, to implement communication between the apparatus 1100 and another device or an apparatus.

The bus 1104 may include a path for transmitting information between various components (for example, the memory 1101, the processor 1102, and the communication interface 1103) of the apparatus 1100.

An embodiment of this application further provides a computer-readable storage medium. The computer-readable storage medium stores computer instructions. When executing the computer instructions, a processor implements the steps in the methods in the foregoing embodiments.

An embodiment of this application further provides a computer program product, including computer instructions. When the computer instructions are executed by a processor, the steps in the methods in the foregoing embodiments are implemented.

It should be noted that the modules or components shown in the foregoing embodiments may be one or more integrated circuits, for example, one or more application-specific integrated circuits, one or more microprocessors, or one or more field programmable gate arrays, configured to implement the foregoing methods. For another example, when one of the foregoing modules is implemented in a form in which a processing element invokes program code, the processing element may be a general-purpose processor, for example, a central processing unit, or another processor, for example, a controller, that can invoke program code. For another example, the modules may be integrated and implemented in a form of a system-on-a-chip (system-on-a-chip, SOC).

All or some of the foregoing embodiments may be implemented by software, hardware, firmware, software modules, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

A person skilled in the art can easily figure out another implementation solution of the present invention after considering the specification and practicing the present content that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as examples, and the actual scope and spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A communication method, applied to a first terminal device or a chip in the first terminal device, wherein the method comprises:
receiving identification information of a first network from an access network device, wherein the access network device supports access of a terminal device to the first network; and
sending a first request message and the identification information of the first network to the access network device when a first list of the first terminal device comprises the identification information of the first network, wherein the first request message is used to request access of the first terminal device to the first network, and the first list comprises identification information of one or more non-public land mobile networks PLMNs.

2. The method according to claim 1, wherein the first terminal device comprises a first logical interface, the first logical interface is configured to access a non-PLMN network, and first logical interface is configured with the first list; and
sending the first request message and the identification information of the first network to the access network device when the first list of the first terminal device comprises the identification information of the first network comprises:
sending the first request message and the identification information of the first network to the access network device when the first logical interface is in an enabled state and the first list comprises the identification information of the first network.

3. The method according to claim 1 or 2, wherein the method further comprises:
receiving identification information of a third network from the access network device, wherein the first list comprises the identification information of the third network; and
sending the first request message and the identification information of the first network to the access network device when the first list of the first terminal device comprises the identification information of the first network comprises:
sending the first request message and the identification information of the first network to the access network device when the first list comprises the identification information of the first network and a priority of the first network is higher than a priority of the third network.

4. The method according to any one of claims 1 to 3, wherein the first request message comprises a first identifier and/or a second identifier, the first identifier is an identifier of the first terminal device in the first network, the second identifier is an identifier of the terminal device in a second network, and the second network is a PLMN network.

5. The method according to claim 4, wherein the first terminal device comprises a second logical interface, the second logical interface is configured to access the second network, and the second identifier is associated with the second logical interface; and
that the first request message comprises the second identifier comprises:
the first request message comprises the second identifier when the first logical interface is associated with the second logical interface or the first network is associated with the second logical interface.

6. The method according to any one of claims 1 to 3, wherein the method further comprises:
sending a second identifier, wherein the second identifier is an identifier of the first terminal device in a second network, and the second network is a PLMN network.

7. The method according to claim 6, wherein before sending the second identifier, the method further comprises:
receiving first information, wherein the first information is used to request the identifier of the first terminal device in the second network.

8. The method according to claim 6 or 7, wherein the first terminal device comprises a second logical interface, the second logical interface is configured to access the second network, and the second identifier is associated with the second logical interface; and
sending the second identifier comprises:
sending the second identifier when the first logical interface is associated with the second logical interface or the first network is associated with the second logical interface.

9. The method according to claim 5 or 8, wherein the method further comprises:
obtaining first indication information, wherein the first indication information indicates that the first logical interface is associated with the second logical interface, or the first indication information indicates that the first network is associated with the second logical interface.

10. The method according to any one of claims 1 to 9, wherein the first request message further comprises second information, and the second information indicates a network slice and/or a logical network that the first terminal device in the first network requests to access; and
the method further comprises:
receiving third information, wherein the third information indicates a network slice and/or a logical network that the first terminal device in the first network is allowed to access.

11. The method according to any one of claims 1 to 10, wherein the method further comprises:
sending a first session request message, wherein the first session request message is used to request to set up a session between the first terminal device and a user plane network element in the first network.

12. The method according to claim 11, wherein the first session request message comprises an identifier of a network slice and/or a logical network, and the network slice and/or the logical network is the network slice and/or the logical network that the first terminal device in the first network requests to access.

13. The method according to any one of claims 1 to 12, wherein the first request message is further used to request to access a first service of the public land mobile network PLMN through the first network; and
the method further comprises:
receiving fourth information, wherein the fourth information indicates whether the first terminal device is allowed to access the first service of the PLMN through the first network, wherein
when the fourth information indicates that the first terminal device is allowed to access the first service of the PLMN through the first network, the first session request message further comprises information indicating the first service.

14. A communication method, applied to a mobility management network element, wherein the method comprises:
receiving a first request message and identification information of a first network from an access network device, wherein the first request message is used to request access of a first terminal device to the first network, the first network is a non-PLMN network, and the access network device and the mobility management network element support access of a terminal device to the first network;
sending a second request message to a control plane network element in the first network based on the identification information of the first network, wherein the second request message is used to request access of the first terminal device to the first network; and
receiving a first response message from the control plane network element, wherein the first response message indicates whether the first terminal device is allowed to access the first network.

15. The method according to claim 14, wherein sending the second request message to the control plane network element in the first network comprises:
sending the second request message to the control plane network element when authentication for the first terminal device succeeds, wherein the authentication for the first terminal device is based on a second identifier, the second identifier is an identifier of the first terminal device in a second network, and the second network is a PLMN network.

16. The method according to claim 15, wherein the first request message comprises the second identifier; or
the method further comprises:
sending a message used to request the identifier of the first terminal device in the second network; and
receiving the second identifier.

17. The method according to claim 15 or 16, wherein sending the second request message to the control plane network element when the authentication for the first terminal device succeeds comprises:
obtaining a first identifier when the authentication for the first terminal device succeeds, wherein the first identifier is an identifier of the first terminal device in the first network, and the first identifier is an external identifier of the first terminal device; and
sending the second request message to the control plane network element, wherein the second request message comprises the first identifier.

18. The method according to any one of claims 14 to 16, wherein the first request message comprises a first identifier, the first identifier is an identifier of the first terminal device in the first network, and the first identifier is an external identifier of the first terminal device; and
sending the second request message to the control plane network element in the first network comprises:
sending the second request message to the control plane network element when verification on the first identifier succeeds.

19. The method according to claim 18, wherein the second request message comprises at least one of the following: the first identifier or information indicating that the verification on the first identifier succeeds.

20. The method according to any one of claims 17 to 19, wherein before sending the second request message to the control plane network element, the method further comprises:
sending, to a core network element in the second network, a message used to request the external identifier of the first terminal device, wherein the core network element in the second network is configured to manage an external identifier of a terminal device belonging to the second network, and the second network is a network deployed by a home operator of the first terminal device; and
receiving the external identifier of the first terminal device from the core network element; and
that the verification on the first identifier succeeds comprises:
the external identifier of the first terminal device from the core network element comprises the first identifier.

21. The method according to any one of claims 14 to 20, wherein the method further comprises:
receiving a first session request message from the first terminal device, wherein the first session request message is used to request to set up a session between the first terminal device and a first user plane network element in the first network.

22. The method according to claim 21, wherein the method further comprises:
triggering, based on the first session request message, a second user plane network element to allocate uplink tunnel information and downlink tunnel information to the session;
receiving first uplink tunnel information and first downlink tunnel information from the second user plane network element, wherein the first uplink tunnel information is used to send uplink data of the session to the second user plane network element, and the first downlink tunnel information is used to send downlink data of the session to the second user plane network element;
sending a second session request message to the control plane network element, wherein the second session request message is used to request to set up a session between the first terminal device and the first user plane network element, and the second session request message comprises the first downlink tunnel information;
receiving second uplink tunnel information from the control plane network element, wherein the second uplink tunnel information is used to send the uplink data of the session to the first user plane network element; and
sending the first uplink tunnel information to the access network device.

23. The method according to any one of claims 14 to 22, wherein the second request message comprises a first terminal identifier, and the first terminal identifier indicates the first terminal device in the mobility management network element.

24. The method according to claim 23, wherein the first response message comprises a second terminal identifier, and the second terminal identifier indicates the first terminal device in the control plane network element.

25. The method according to claim 24, wherein the method further comprises:
receiving a downlink non-access stratum NAS message and the first terminal identifier from the control plane network element, and sending the downlink NAS message to the first terminal device based on the first terminal identifier; and/or
receiving an uplink NAS message from the first terminal device, and sending the uplink NAS message and the second terminal identifier to the control plane network element.

26. A communication method, applied to a control plane network element in a first network, wherein the method comprises:
receiving a second request message from a mobility management network element, wherein the second request message is used to request access of a first terminal device to the first network, and the mobility management network element supports access of a terminal device to the first network;
determining, based on subscription information of the first terminal device in the first network, whether the first terminal device is allowed to access the first network; and
sending a first response message to the mobility management network element, wherein the first response message indicates whether the first terminal device is allowed to access the first network.

27. The method according to claim 26, wherein the second request message is further used to request a first service that accesses a PLMN through the first network, the subscription information of the first terminal device in the first network comprises second indication information, and the second indication information indicates whether the first terminal device is allowed to access a service of the PLMN through the first network; and
determining, based on the subscription information of the first terminal device in the first network, whether the first terminal device is allowed to access the first network comprises:
determining, based on the second request message and the second indication information, whether the first terminal device is allowed to access the first service of the PLMN through the first network.

28. The method according to claim 27, wherein the first response message further comprises third information, and the third information indicates whether the first terminal device is allowed to access the first service of the PLMN through the first network.

29. The method according to any one of claims 26 to 28, wherein before determining, based on the subscription information of the first terminal device in the first network, whether the first terminal device is allowed to access the first network, the method further comprises:
obtaining the subscription information of the first terminal device in the first network based on a first identifier, wherein the first identifier is an identifier of the first terminal device in the first network.

30. The method according to claim 29, wherein the second request message comprises the first identifier; or
the method further comprises:
sending a message used to request the identifier of the first terminal device in the first network; and
receiving the first identifier.

31. The method according to claim 29 or 30, wherein the first identifier is an external identifier of the first terminal device; and
obtaining the subscription information of the first terminal device in the first network based on the first identifier comprises:
obtaining, based on the first identifier, the subscription information of the first terminal device in the first network when verification on the first identifier succeeds.

32. The method according to claim 31, wherein that the verification on the first identifier succeeds comprises:
the second request message further comprises information indicating that the verification on the first identifier succeeds.

33. The method according to claim 31, wherein before obtaining the subscription information of the first terminal device in the first network based on the first identifier, the method further comprises:
sending, to a core network element in a second network, a message used to request the external identifier of the first terminal device, wherein the core network element in the second network is configured to manage an external identifier of a terminal device belonging to the second network, and the second network is a network deployed by a home operator of the first terminal device; and
receiving the external identifier of the first terminal device from the core network element; and
that the verification on the first identifier succeeds comprises:
the external identifier of the first terminal device from the core network element comprises the first identifier.

34. The method according to claim 32, wherein before obtaining the subscription information of the first terminal device in the first network based on the first identifier, the method further comprises:
sending, to a core network element in a second network, a message used to request to verify the first subscription identifier, wherein the core network element in the second network is configured to manage an external identifier of a terminal device belonging to the second network, and the second network is a network deployed by a home operator of the first terminal device; and
receiving a third response message from the core network element, wherein the third response message indicates a result of the verification on the first identifier; and
that the verification on the first identifier succeeds comprises:
the third response message indicates that the verification on the first identifier succeeds.

35. The method according to any one of claims 31 to 34, wherein before the verification on the first identifier succeeds, the method further comprises:
performing authentication on the first terminal device based on a second identifier, wherein the second identifier is an identifier of the first terminal device in the second network, and the second network is the network deployed by the home operator of the first terminal device.

36. The method according to claim 35, wherein performing the authentication on the first terminal device based on the second identifier comprises:
obtaining the second identifier of the first terminal device;
sending a first authentication request message to the core network element in the second network, wherein the core network element in the second network is configured to perform authentication on a terminal device belonging to the second network, the first authentication request message is used to request to perform authentication on the first terminal device, and the first authentication request message comprises the second identifier;
receiving a first authentication response message from the core network element, wherein the first authentication response message comprises first authentication information of the first terminal device;
sending a second authentication request message to the first terminal device based on the first authentication information;
receiving a second authentication response message from the first terminal device, wherein the second authentication response message comprises second authentication information of the first terminal device; and
performing authentication on the first terminal device based on the first authentication information and the second authentication information; or
sending a third authentication request message to the core network element, wherein the third authentication request message carries the second authentication information; and
receiving a third authentication response message from the core network element, wherein the third authentication response message indicates an authentication result of the first terminal device.

37. The method according to claim 36, wherein obtaining the second identifier of the first terminal device comprises:
obtaining the second identifier from the second request message; or
sending a message used to request the identifier of the first terminal device in the second network; and
receiving the second identifier.

38. The method according to any one of claims 29 to 37, wherein before obtaining the subscription information of the first terminal device in the first network based on the first identifier, the method further comprises:
performing authentication on the first terminal device based on the first identifier.

39. The method according to claim 38, wherein performing, based on the first subscription identifier, access authentication for the first terminal device for accessing the first network comprises:
performing authentication on the first terminal device based on the first subscription identifier when a preset condition is met, wherein the preset condition comprises at least one of the following conditions: the subscription information of the first terminal device in the first network requires to perform access authentication on the first terminal device based on the first identifier, the second request message does not comprise the verified first identifier, the first identifier is a private identifier in the first network, or the control plane network element requires to perform, based on the first identifier, authentication on a terminal device that accesses the first network.

40. The method according to any one of claims 26 to 39, wherein the second request message further comprises fifth information, the fifth information indicates a location of the first terminal device, the subscription information of the first terminal device in the first network comprises third indication information, and the third indication information indicates an area of the first network that is allowed to be accessed by the first terminal device; and
determining, based on the subscription information of the first terminal device in the first network, whether the first terminal device is allowed to access the first network comprises:
when the location of the first terminal device is in the area indicated by the third indication information, determining that the first terminal device is allowed to access the first network.

41. The method according to any one of claims 26 to 40, wherein the second request message further comprises first information, the first information indicates a network slice and/or a logical network that the first terminal device in the first network requests to access, the subscription information of the first terminal device in the first network comprises fourth indication information, and the fourth indication information indicates a network slice and/or a logical network that the first terminal device in the first network is allowed to access; and
determining, based on the subscription information of the first terminal device in the first network, whether the first terminal device is allowed to access the first network comprises:
when the network slice and/or logical network that the first information requests to access is comprised in the network slice and/or logical network that is allowed to access and that is indicated by the fourth indication information, determining the network slice and/or logical network that the first terminal device in the first network is allowed to access.

42. The method according to claim 41, wherein the first response message further comprises second information, and the second information indicates the network slice and/or logical network that the first terminal device in the first network is allowed to access.

43. The method according to any one of claims 26 to 42, wherein the first response message comprises a second terminal identifier, and the second terminal identifier indicates the first terminal device in the control plane network element.

44. The method according to any one of claims 40 to 43, wherein the method further comprises:
receiving a second session request message from the mobility management network element, wherein the second session request message is used to request to set up a session between the first terminal device and a first user plane network element in the first network, the second session request message comprises first downlink tunnel information, the first downlink tunnel information is used to send downlink data of the session to a second user plane network element in a third network, and the third network is a network deployed by a home operator of the mobility management network element;
sending, to the first user plane network element based on session subscription information of the first terminal device in the first network, a message used to request the first user plane network element to allocate uplink tunnel information to the session;
receiving second uplink tunnel information from the first user plane network element, wherein the second uplink tunnel information is used to send uplink data of the session to the first user plane network element; and
sending the second uplink tunnel information to the mobility management network element.

45. The method according to claim 44, wherein the second session request message further comprises sixth information, the sixth information indicates an identifier of the network slice and/or logical network that the first terminal device in the first network requests to access, the session subscription information of the first terminal device in the first network comprises fifth indication information, and the fifth indication information indicates the network slice and/or logical network that the first terminal device in the first network is allowed to access; and
sending a third session request message to the first user plane network element based on the session subscription information of the first terminal device in the first network comprises:
sending the third session request message to the first user plane network element when the network slice and/or logical network that the sixth information requests to access is comprised in the network slice and/or logical network that is allowed to access and that is indicated by the fifth indication information.

46. The method according to claim 45, wherein the second session request message further comprises information indicating the first user plane network element to filter out a non-allowed data packet.

47. The method according to any one of claims 44 to 46, wherein the second session request message further comprises the first identifier or the second terminal identifier; and
before sending the third session request message to the first user plane network element based on the session subscription information of the first terminal device in the first network, the method further comprises:
obtaining the session subscription information of the first terminal device in the first network based on the first identifier or the second terminal identifier.

48. The method according to any one of claims 44 to 47, wherein the third session request message further comprises information indicating that the first terminal device is allowed to access a first service of the PLMN.

49. A communication method, applied to an access network device, wherein the method comprises:
receiving a first message from a first terminal device, and triggering setup of a first connection based on the first message, wherein the first connection is a connection between the first terminal device and a first mobility management network element; and
sending a first connection identifier to the first terminal device, wherein the first connection identifier indicates the first connection.

50. The method according to claim 49, wherein the first message comprises sixth indication information, and the sixth indication information indicates to set up the connection between the first terminal device and the first mobility management network element; and
triggering the setup of the first connection based on the first message comprises:
triggering the setup of the first connection based on the sixth indication information.

51. The method according to claim 49, wherein triggering the setup of the first connection based on the first message comprises:
triggering the setup of the first connection when the first message does not comprise the first connection identifier.

52. The method according to claim 49, wherein triggering the setup of the first connection based on the first message comprises:
triggering the setup of the first connection when the first message comprises the first connection identifier, and the access network device does not store a correspondence between the first terminal device and the first connection identifier.

53. The method according to any one of claims 49 to 51, wherein the method further comprises:
allocating the first connection identifier to the first connection; and
sending the first connection identifier to the first terminal device.

54. The method according to any one of claims 49 to 53, wherein the method further comprises:
storing the correspondence between the first terminal device and the first connection identifier.

55. The method according to any one of claims 49 to 54, wherein the first message further comprises information indicating a first network; and
the method further comprises:
selecting the first mobility management network element based on the first message, wherein the first mobility management network element supports access of a terminal device to the first network.

56. The method according to any one of claims 49 to 55, wherein the first message further comprises a first NAS message, and the first NAS message is an access request message or a service request message.

57. The method according to any one of claims 49 to 56, wherein the first connection is used to forward a message between the first terminal device and the first network; and
the method further comprises:
receiving a second message from the first terminal device, and triggering setup of a second connection based on the second message, wherein the second connection is a connection between the first terminal device and a second mobility management network element, the second connection is used to forward a message between the first terminal device and a second network, and the second network and the first network are different networks; and
sending a second connection identifier to the first terminal device, wherein the second connection identifier indicates the second connection.

58. The method according to claim 57, wherein before receiving the first message from the first terminal device and receiving the second message from the first terminal device, the method further comprises:
setting up a third connection between the first terminal device and the access network device;
receiving the first message from the first terminal device comprises:
receiving the first message from the first terminal device through the third connection; and
receiving the second message from the first terminal device comprises:
receiving the second message from the first terminal device through the third connection.

59. The method according to claim 58, wherein the second message further comprises a second NAS message, and the second NAS message is an access request message or a service request message.

60. The method according to claim 58 or 59, wherein the first connection is associated with at least one first user plane link, the second connection is associated with at least one second user plane link, the first user plane link is used to transmit user plane data between the first terminal device and the first network, and the second user plane link is used to transmit user plane data between the first terminal device and the second network; and
the method further comprises:
releasing the third connection when the at least one first user plane link has no data transmission and the at least one second user plane link has no data transmission.

61. A communication method, applied to a first terminal device or a chip in the first terminal device, wherein the method comprises:
sending a first message to an access network device, wherein the first message is used to trigger setup of a first connection, and the first connection is a connection between the first terminal device and a first mobility management network element; and
receiving a first connection identifier from the access network device, wherein the first connection identifier indicates the first connection.

62. The method according to claim 61, wherein the first message comprises sixth indication information, and the sixth indication information indicates to set up the connection between the first terminal device and the first mobility management network element.

63. The method according to claim 61, wherein sending the first message to the access network device comprises:
allocating the first connection identifier to the first connection; and
sending the first message to the access network device, wherein the first message comprises the first connection identifier.

64. The method according to any one of claims 61 to 63, wherein the first message further comprises information indicating the first network, and the first mobility management network element supports access of a terminal device to the first network.

65. The method according to any one of claims 61 to 64, wherein the first message further comprises a second NAS message, and the second NAS message is a registration request message or a service request message.

66. The method according to any one of claims 61 to 65, wherein the first connection is used to forward a message between the first terminal device and the first network; and
the method further comprises:
sending a second message to the access network device, wherein the second message is used to trigger setup of a second connection, the second connection is a connection between the first terminal device and a second mobility management network element, the second connection is used to forward a message between the first terminal device and a second network, and the second network and the first network are different networks; and
receiving a second connection identifier from the access network device, wherein the second connection identifier indicates the second connection.

67. The method according to claim 66, wherein sending the first message to the access network device comprises:
sending the first message to the access network device through a third connection, wherein the third connection is a connection between the first terminal device and the access network device; and
sending the second message to the access network device comprises:
sending the second message to the access network device through the third connection.

68. A communication apparatus, wherein the communication apparatus comprises a functional module configured to implement the communication method according to any one of claims 1 to 67.

69. A communication apparatus, comprising a processor and a memory, wherein
the memory stores computer-executable instructions; and
the processor executes the computer-executable instructions stored in the memory, to enable the communication apparatus to perform the communication method according to any one of claims 1 to 67.

70. A communication system, comprising a mobility management network element and a control plane network element, wherein
the mobility management network element is configured to perform the communication method according to any one of claims 14 to 25, and the control plane network element is configured to perform the communication method according to any one of claims 26 to 48.

71. The system according to claim 70, wherein the system further comprises a terminal device, and the terminal device is configured to perform the communication method according to any one of claims 1 to 13.

72. A communication system, comprising an access network device and a terminal device, wherein the access network device is configured to perform the communication method according to any one of claims 49 to 60, and the terminal device is configured to perform the communication method according to any one of claims 61 to 67.

73. A computer-readable storage medium, wherein the computer-readable storage medium stores computer-executable instructions, and when the computer-executable instructions are executed by a processor, the communication method according to any one of claims 1 to 67 is implemented.

74. A computer program product, comprising a computer program, wherein when the computer program is executed by a processor, the communication method according to any one of claims 1 to 67 is implemented.
